# EUROPEAN PATENT APPLICATION

(11) **EP 4 513 258 A1**
(43) Date of publication of application: **26.02.2025**
(21) Application number: 23791217.5
(22) Date of filing: 18.04.2023
(51) Int. Cl.: G02F 1/13, G02F 1/1347, G02F 1/1337

(54) **SINGLE-SIDE PEEP-PROOF LIQUID-CRYSTAL DISPLAY DEVICE**

(30) Priority: 20.04.2022 CN 202210416389
(71) Applicant: Jiangsu Hecheng Display Technology Co., Ltd., Nanjing, Jiangsu 210000 (CN)
(72) Inventor: JIA, Benchao, Nanjing, Jiangsu 210000 (CN); DING, Wenquan, Nanjing, Jiangsu 210000 (CN); WANG, Panpan, Nanjing, Jiangsu 210000 (CN); ZHOU, Zhenting, Nanjing, Jiangsu 210000 (CN)
(74) Representative: Serjeants LLP
(86) International application number: PCT/CN2023/088916
(87) International publication number: WO 2023/202562

(57) **Abstract**

The present invention provides a single-side peep-proof liquid crystal display device. The liquid crystal display device of the present invention sequentially comprises, along the light emergent side, a backlight plate, a lower polarizer, a display panel, an upper polarizer and a dye liquid crystal panel; the display panel comprises at least one substrate, at least one conductive layer, and a layer of a first liquid crystal composition; the dye liquid crystal panel comprises a first substrate, a first conductive layer, a dye liquid crystal layer, and a second substrate; and the dye liquid crystal layer comprises a second liquid crystal composition and dye molecules. The liquid crystal display device of the present invention has a better peep-proofing effect in the single-side viewing angle peep-proofing mode, and has a better wide viewing angle on the opposite side, and in the wide viewing angle mode, it has a better viewing angle display effect.

## Description

### Technical Field

The present invention relates to a liquid crystal display device, more specifically, relates to a single-side peep-proof liquid crystal display device.

### Background Arts

With the development of display technology, liquid crystal display (LCD) and other flat display devices are widely used in various consumer electronic products such as cell phones, TVs, personal digital assistants, digital cameras, computers and the like because of their advantages of high quality, energy saving and environmental protection, ultra-thin body and wide range of applications.

Viewing angle range is an important performance indicator for liquid crystal display panels. Liquid crystal display panels need to adjust the arrangement of liquid crystal molecules to change the polarization state of the transmitted light and to further realize the display function. Due to the effect of optical anisotropy of liquid crystal molecules, the viewing angle of liquid crystal display is smaller than the viewing angle of cathode ray tube display. With the development of technology, in order to increase the viewing angle range of liquid crystal displays, vertical alignment (VA) mode, polymer vertical alignment (PVA) mode, in-plane switching (IPS) mode, fringe field switching (FFS) mode and other technologies come into being, realizing the wide viewing angle display of liquid crystal displays.

However, with the development of society, people have different needs for the viewing angle of liquid crystal displays in different application occasions. For example, when the user is in an open environment and the confidentiality is required (such as entering the withdrawal password, viewing private information or business negotiations when taking public transportation or the like), a display having a narrower viewing angle is required to achieve the purpose of peep-proofing and protecting personal privacy. When the user is in an environment with sharing needs, such as watching the display device together with others, a display having a wider viewing angle is required to realize the conference video sharing. Meanwhile, with the advancement of instrumentation intelligence, the requirements of the display device is not only to achieve the switching between wide viewing angle and narrow viewing angle, but also to be able to achieve a narrow viewing angle of a specific angle, while the function of a wide viewing angle is still available in the relative angle, for example, the front viewing angle (theta=-30°~30°) can be displayed normally, and the side viewing angle (theta=-50°~-30°) can realize peep-proofing.

At present, there are mainly the following methods to realize switching between wide viewing angle and narrow viewing angle of liquid crystal display devices.

The first one is achieved via attaching a peep-proof film to the display screen. When peep-proofing is required, the screen is covered using the peep-proof film to achieve the narrowing of the viewing angle. But this method needs to prepare a peep-proof film additionally, which causes inconvenience to the user. Besides, a peep-proof film can only realize peep-proofing of one viewing angle, once the peep-proof film is attached, the peep-proof viewing angle will be fixed, which will only realize a narrow viewing angle at the specific direction, and the wide viewing angle display cannot be restored.

The second one is to set dual light source backlight system in the liquid crystal display device for adjusting the display viewing angle, the dual light source backlight system consists of two layers of stacked light guide plate combined with the antiprism lens, in which the light guide plate on the top layer combined with the antiprism lens can change the direction of the light, so that the light is confined to a relatively narrow angle range, to achieve the narrow viewing angle of the liquid crystal display, and the function of the bottom light guide plate combined with the antiprism lens can achieve a wide viewing angle. However, although this dual light source backlight system can realize the switch between the wide viewing angle and narrow viewing angle, it cannot realize the function of achieving a wide viewing angle at one certain angle and a narrow viewing angle at the other angle at the same time, that is, the function of narrow viewing angle at a single side.

The third one is to divide the driving electrodes on the panel of the liquid crystal display into two types, one of which is a wide viewing angle display driving electrode, and the other is a viewing angle control electrode. When an appropriate voltage is applied on viewing angle control electrode, an appropriate leakage of light can be generated in the liquid crystal display device, and thereby the switching between the wide viewing angle and the narrow viewing angle is realized. However, setting two electrodes, that is, a wide viewing angle display driving electrode and a viewing angle control electrode, on the liquid crystal display device results in a decrease in the panel brightness of the liquid crystal display device and a complicated manufacture processing. Meanwhile, it cannot realize the function of achieving a wide viewing angle at a certain angle and a narrow viewing angle at another angle at the same time, that is, the function of narrow viewing angle at a single side.

How to obtain a liquid crystal display device with a single-sided narrow viewing angle and a wide viewing angle on the other side is an urgent problem to be solved in the field.

### Summary of the Invention

**Objects of invention:** It is an object of the present invention to provide a single-side peep-proof liquid crystal display device, which has a better peep-proofing effect in the single-side viewing angle peep-proofing mode, and has a better wide viewing angle on the opposite side, and in the wide viewing angle mode, it has a better viewing angle display effect.

**Technical solutions:** To realize the above invention objects, the present invention provides a single-side peep-proof liquid crystal display device, sequentially comprising, along the light emergent side, a backlight plate, a lower polarizer, a display panel, an upper polarizer and a dye liquid crystal panel;
the display panel comprises at least one substrate, at least one conductive layer, and a layer of a first liquid crystal composition;
the dye liquid crystal panel comprises a first substrate, a first conductive layer, a dye liquid crystal layer, and a second substrate; and
the dye liquid crystal layer comprises a second liquid crystal composition and dye molecules.

In some embodiments of the present invention, the direction of the upper polarizer and the direction of the lower polarizer each independently is in a vertical direction or a horizontal direction; preferably, the direction of the upper polarizer and the direction of the lower polarizer are different; further preferably, the direction of the upper polarizer is a vertical direction; still further preferably, the direction of the upper polarizer is a vertical direction and the direction of the lower polarizer is a horizontal direction.

In some embodiments of the present invention, the display panel may generate a transverse electric field or a longitudinal electric field in the energized state; preferably, the display panel generates a transverse electric field in the energized state.

In some embodiments of the present invention, the display mode of the display panel is a TN display mode, a STN display mode, a VA display mode, an IPS display mode, a FFS display mode, a PSA display mode or a PSVA display mode; preferably, the display mode of the display panel is an IPS display mode or a FFS display mode.

In some embodiments of the present invention, the display panel comprises a first substrate, a first conductive layer, a layer of a first liquid crystal composition, and a second substrate, and further, a second conductive layer is provided between the layer of the first liquid crystal composition and the second substrate.

In some embodiments of the present invention, the display panel comprises a first substrate, a first conductive layer, a layer of a first liquid crystal composition, and a second substrate.

In some embodiments of the present invention, the display panel comprises a first substrate, a first conductive layer, a first alignment layer, a layer of a first liquid crystal composition, a second alignment layer, and a second substrate, and further, a second conductive layer is provided between the second substrate and the second alignment layer.

In some embodiments of the present invention, the display panel comprises a first substrate, a first conductive layer, a first alignment layer, a layer of a first liquid crystal composition, a second alignment layer, and a second substrate.

In some embodiments of the present invention, the display panel comprises a first substrate, a first conductive layer, a first alignment layer, a layer of a first liquid crystal composition, a second alignment layer, a second conductive layer, and a second substrate.

In some embodiments of the present invention, the first liquid crystal composition in the layer of the first liquid crystal composition of the display panel has a dielectric anisotropy of >0 (for example, >1, >2, >3, >4, >5, >6, >7).

In some embodiments of the present invention, the first alignment layer and second alignment layer comprise a polyimide, a polymerized derivative having a polyamido acid that is decomposable or allosteric in the presence of light, or a polyorganosiloxane compound.

In some embodiments of the present invention, in order to make the direction of the incident light have perpendicular and parallel direction components relative to the long axis of the dye liquid crystal, the display mode of the dye liquid crystal panel is an IPS display mode or a FFS display mode.

In some embodiments of the present invention, in order to make the direction of the incident light have perpendicular and parallel direction components relative to the long axis of the dye liquid crystal, the dye liquid crystal panel generates a transverse electric field in the energized state.

In some embodiments of the present invention, the dye liquid crystal panel comprises a first substrate, a first conductive layer, a first alignment layer, a dye liquid crystal layer, a second alignment layer, and a second substrate.

In some embodiments of the present invention, the second liquid crystal composition in the dye liquid crystal layer of the dye liquid crystal panel has a dielectric anisotropy of >0 (for example, >1, >2, >3, >4, >5, >6, >7).

In some embodiments of the present invention, the dye liquid crystal layer has a thickness of 1-12 um, for example, 1 um, 1.2 um, 1.4 um, 1.6 um, 1.8 um, 2 um, 2.2 um, 2.4 um, 2.6 um, 2.8 um, 3 um, 3.2 um, 3.4 um, 3.6 um, 3.8 um, 4 um, 4.2 um, 4.4 um 4.6 um, 4.8 um, 5 um, 5.2 um, 5.4 um, 5.6 um, 5.8 um, 6 um, 6.2 um, 6.4 um, 6.6 um, 6.8 um, 7 um, 7.2 um, 7.4 um, 7.6 um, 7.8 um, 8 um, 8.2 um, 8.4 um, 8.6 um, 8.8 um, 9 um, 9.2 um, 9.4 um, 9.6 um, 9.8 um, 10 um, 10.2 um, 10.4 um, 10.6 um, 10.8 um, 11 um, 11.2 um, 11.4 um, 11.6 um, 11.8 um, 12 um, which is preferably 4-10 um.

In some embodiments of the present invention, the single-side peep-proof liquid crystal display device sequentially comprises, along the light emergent side, a backlight plate, a lower polarizer, a display panel, an upper polarizer, and a dye liquid crystal panel;
the display panel comprises a first substrate, a first conductive layer, a layer of a first liquid crystal composition, and a second substrate;
the dye liquid crystal panel comprises a first substrate, a first conductive layer, a first alignment layer, a dye liquid crystal layer, a second alignment layer, and a second substrate;
the dye liquid crystal layer comprises a second liquid crystal composition and dye molecules; and
the display modes of the display panel and the dye liquid crystal panel each independently is an IPS display mode or a FFS display mode.

In some embodiments of the present invention, the single-side peep-proof liquid crystal display device of the present application sequentially comprises, along the light emergent side, a backlight plate, a lower polarizer, a display panel, an upper polarizer, and a dye liquid crystal panel;
the display panel comprises a first substrate, a first conductive layer, a first alignment layer, a layer of a first liquid crystal composition, a second alignment layer, and a second substrate;
the dye liquid crystal panel comprises a first substrate, a first conductive layer, a first alignment layer, a dye liquid crystal layer, a second alignment layer, and a second substrate;
the dye liquid crystal layer comprises a second liquid crystal composition and dye molecules; and
the display modes of the display panel and the dye liquid crystal panel each independently is an IPS display mode or a FFS display mode.

In some embodiments of the present invention, in the dye liquid crystal panel, the dye molecules are dichroic dye molecules.

In some embodiments of the present invention, the liquid crystal display device of the present invention is in a wide viewing angle mode when a voltage is applied only on the display panel, and the liquid crystal display device of the present invention is in a single-side viewing angle peep-proofing mode when a voltage is applied on both the display panel and the dye liquid crystal panel.

In some embodiments of the present invention, the driving voltage of the display panel is 1V-10V (1V, 1.5V, 2V, 2.5V, 3V, 3.5V, 4V, 4.5V, 5V, 5.5V, 6V, 6.5V, 7V, 7.5V, 8V, 8.5V, 9V, 9.5V, 10V), which is preferably 2V-10V.

In some embodiments of the present invention, the driving voltage of the dye liquid crystal panel is 1V-10V (1V, 1.5V, 2V, 2.5V, 3V, 3.5V, 4V, 4.5V, 5V, 5.5V, 6V, 6.5V, 7V, 7.5V, 8V, 8.5V, 9V, 9.5V, 10V), which is preferably 2V-10V.

In some embodiments of the present invention, in the energized state, the dye liquid crystal panel generates a transverse electric field and drives the second liquid crystal composition and the dye molecules to rotate in-plane, parallel to the substrate surface, and the rotate angles of the second liquid crystal composition and the dye molecules change according to the difference of the applied voltage. According to the dichroism of the dye molecules, when the polarization direction of the incident light and the long axis of the dye liquid crystal are parallel to each other, the light is basically absorbed by the dye molecules, which is manifested as no emergent light is emitted out of the dye liquid crystal panel, and when the polarization direction of the incident light and the long axis of the dye liquid crystal molecules are perpendicular to each other, it is manifested as the light can be normally transmitted through the dye liquid crystal panel. Therefore, according to the difference of the applied voltage, the polarization direction of the incident light and the dye liquid crystal molecules form different vector angles, the light parallel to the long axis of the dye liquid crystal molecules is absorbed, and the light perpendicular to the long axis of the dye liquid crystal molecules passes through normally, then the angle at which the light is absorbed forms a narrow viewing angle (that is, peep-proofing is achieved at the particular angle) and the angle at which the light passes through normally can display normally (that is, peep-proofing is achieved at a single-side angle).

In some embodiments of the present invention, the dichroic dye molecule is one or more dyes selected from the group consisting of dyes of azo type, anthraquinone type, phthalocyanine, cyanine type, indigoid, arylmethane, nitro and nitroso.

In some embodiments of the present invention, the dichroic dye molecule is selected from the group consisting of dyes of azo type and anthraquinone type.

In the present invention, the dichroic dyes show different absorption properties for the visible spectrum according to the difference on the structure, a single dichroic dye mainly absorbs light of a specific wavelength and the color displayed is the complementary color of the all lights that pass through, and it is difficult to achieve black color with one single dye, therefore, it is needed to mix a variety of dyes to absorb lights of a plurality of wavelengths, and then achieve an even absorption of the visible light band according to the degree of sensitivity of the human eye to light, which is called black. As to the second liquid crystal composition containing dichroic dyes, in the visible light band, the more uniform the absorption of light of different wavelengths by the second liquid crystal composition, the more uniform the distribution of the transmittance curve, the better the display effect of the display device. So in the coordination of a variety of dichroic dyes, a suitable proportion and better chromaticity reproduction thereof shall be selected; in addition, when the second liquid crystal composition and the dyes have a better mutual solubility, the higher the content of the dichroic dye that can be added, the higher the contrast.

In some embodiments of the present invention, the dichroic dye molecule is selected from the group consisting of the following compounds:

| Dye No: | Molecular Structure | λmax (nm) | Color |
|---|---|---|---|
| 1 | 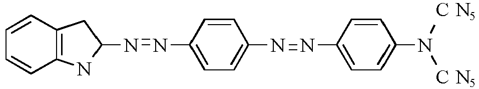 | 574 | Violet |
| 2 | 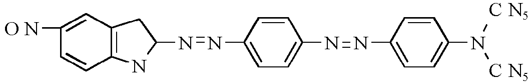 | 610 | Blue-green |
| 3 | 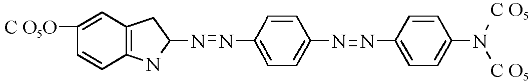 | 570 | Violet |
| 4 | 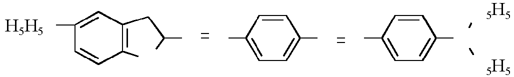 | 595 | Blue-green |
| 5 | 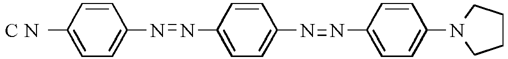 | 507 | Purple |
| 6 | 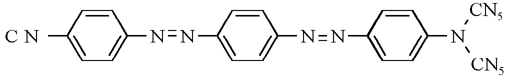 | 526-533 | Purple |
| 7 | 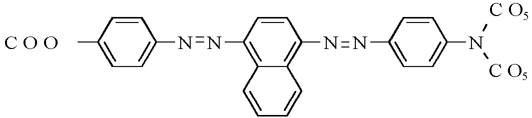 | 573 | Violet |
| 8 | 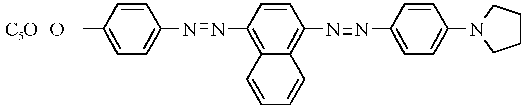 | 574 | Violet |
| 9 | 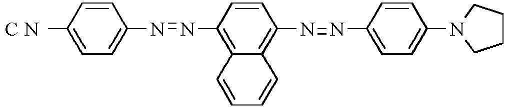 | 533-542 | Purple |
| 10 | 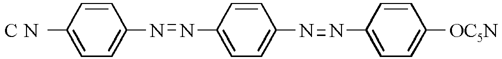 | 390-398 | Yellow |
| 11 | 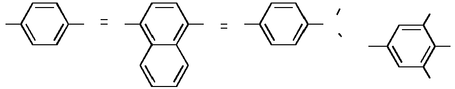 | 402 | Yellow |
| 12 | 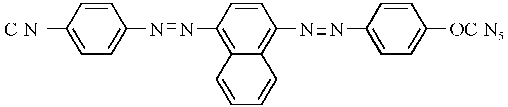 | 439-446 | Orange-yel low |
| 13 | 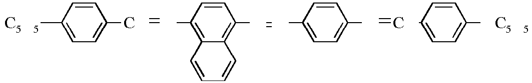 | 443-450 | Orange-yel low |
| 14 | 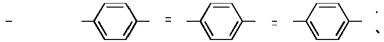 | 511 | Red |
| 15 | 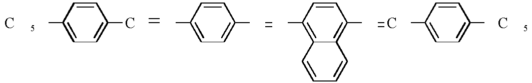 | 447 | Orange-yel low |
| 16 | 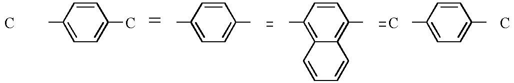 | 450 | Orange-yel low |
| 17 | 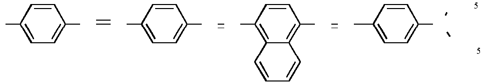 | 563-573 | Blue-violet |
| 18 | 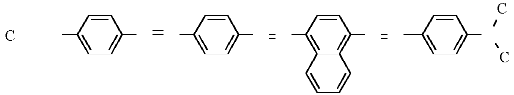 | 580-589 | Blue-green |
| 19 | 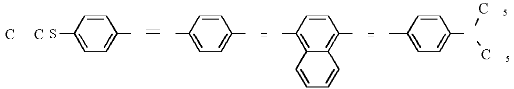 | 591-599 | Blue-green |
| 20 | 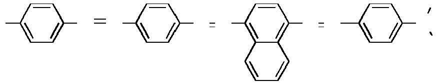 | 592-600 | Blue-green |
| 21 | 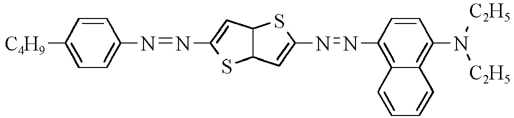 | 621-660 | Blue |
| 22 | 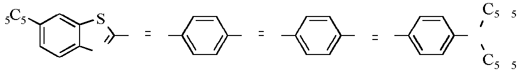 | 591-606 | Blue-green |
| 23 | 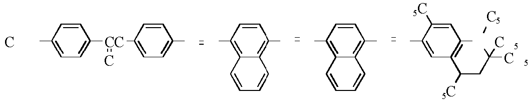 | 634-643 | Blue |
| 24 | 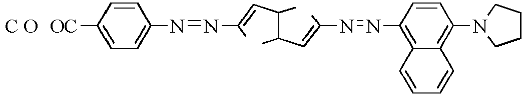 | 674 | Blue |
| 25 | 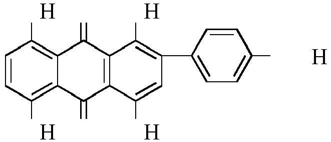 | 640 | Blue |
| 26 | 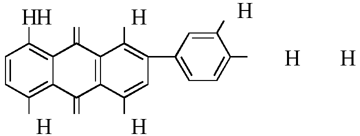 | 645 | Blue |
| 27 | 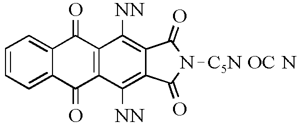 | 680 | Blue |
| 28 | 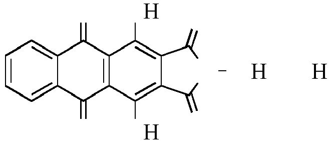 | 760 | Blue |
| 29 | 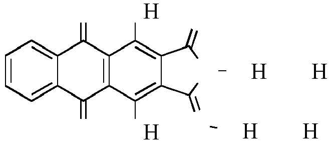 | 670 | Blue |
| 30 | 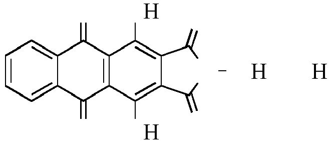 | 760 | Blue |
| 31 | 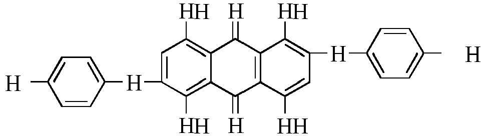 | 595 | Blue-green |
| 32 | 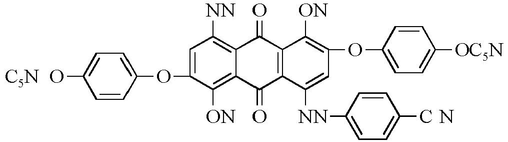 | 630 | Blue |
| 33 | 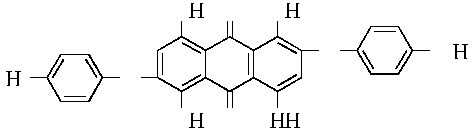 | 595 | Blue-green |
| 34 | 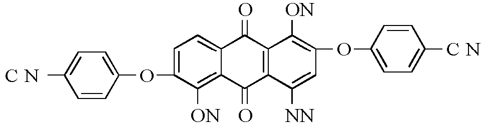 | 535 | Purple |
| 35 | 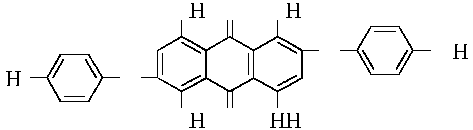 | 595 | Blue-green |

In some embodiments of the present invention, the dichroic dye provides 0.01-10 wt.% of the total weight of the second liquid crystal composition (including any of the numerical values or sub-ranges therebetween), for example, 0.1 wt.%, 0.5 wt.%, 1 wt.%, 1.2 wt.%, 1.5 wt.%, 1.8 wt.%, 2 wt.%, 2.2 wt.%, 2.5 wt.%, 2.8 wt.%, 3 wt.%, 3.2 wt.%, 3.5 wt.%, 3.8 wt.%, 4 wt.%, 4.2 wt.%, 4.5 wt.%, 4.8 wt.%, 5 wt.%, 5.2 wt.%, 5.5 wt.%, 5.8 wt.%, 6 wt.%, 6.2 wt.%, 6.5 wt.%, 6.8 wt.%, 7 wt.%, 7.2 wt.%, 7.5 wt.%, 7.8 wt.%, 8 wt.%, 8.2 wt.%, 8.5 wt.%, 8.8 wt.%, 9 wt.%, 9.2 wt.%, 9.5 wt.%, 9.8 wt.%, 10 wt.%, or a range between any two numerical values of these; preferably, 1-6 wt.%; in order to obtain a better narrow viewing angle peep-proofing effect, it is further preferred to be 2-4 wt.%.

In some embodiments of the present invention, in a dye liquid crystal panel, the second liquid crystal composition comprises at least one compound of general formula M: 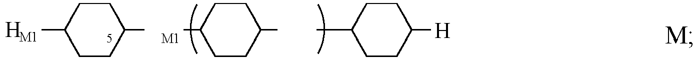 wherein,
R_{M1} and R_{M2} each independently represents C₁₋₁₂ linear or branched alkyl, 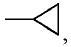 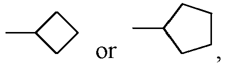 one or more than two nonadjacent -CH₂- in the C₁₋₁₂ linear or branched alkyl can each be independently replaced by -CH=CH-, -C≡C-, -O-, -CO-, -CO-O- or -O-CO-;
ring 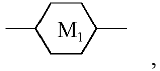 ring 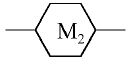 and ring 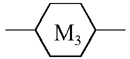 each independently represents 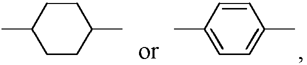 wherein one or more -CH₂- in 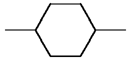 can be replaced by -O-, one or more single bond in the rings can be replaced by double bond, at most one -H on 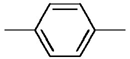 can be substituted by halogen;
Z_{M1} and Z_{M2} each independently represents single bond, -CO-O-, -O-CO-, -CH₂O-, -OCH₂-, -C≡C-, -CH=CH-, -CH₂CH₂- or -(CH₂)₄-; and
n_{M} represents 0, 1 or 2, wherein when n_{M}=2, ring 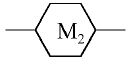 can be same or different, Z_{M2} can be same or different.

The alkenyl group in the present invention is preferably selected from the groups represented by any one of formula (V1) to formula (V9), particularly preferably formula (V1), formula (V2), formula (V8) or formula (V9). The groups represented by formula (V1) to formula (V9) are shown as follows: 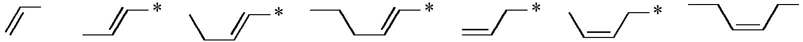 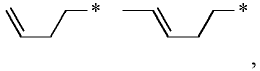 in which, * represents carbon atom bound in the ring structure.

The alkenoxy group in the present invention is preferably selected from the group represented by any one of formula (OV1) to formula (OV9), particularly formula (OV1), formula (OV2), formula (OV8) or formula (OV9). The groups represented by formula (OV1) to formula (OV9) are shown as follows: 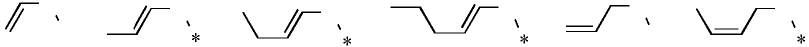 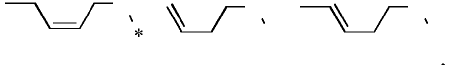 in which, * represents carbon atom bound in the ring structure.

In some embodiments of the present invention, the compound of general formula M is selected from a group consisting of the following compounds: 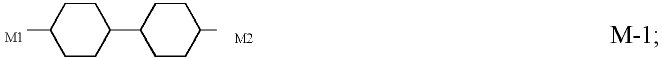 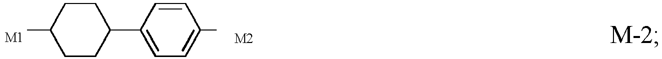 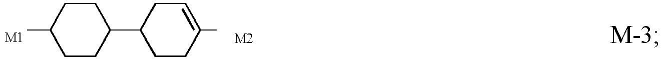 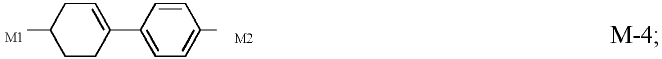 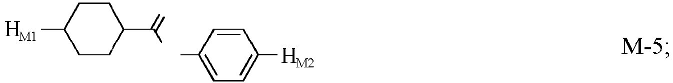 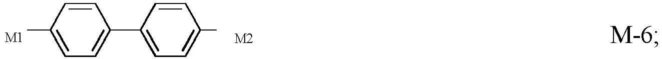 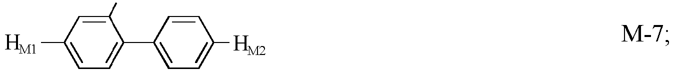 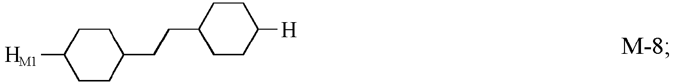 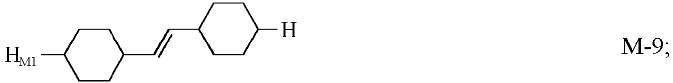 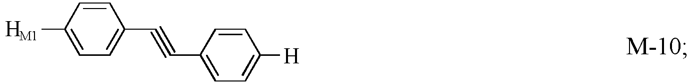 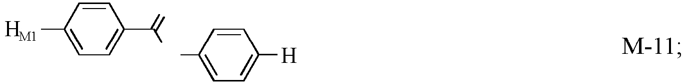 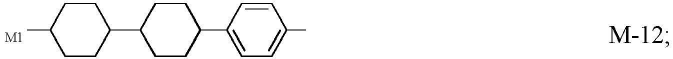 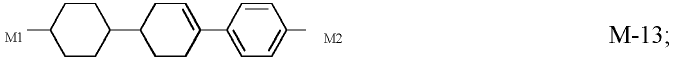 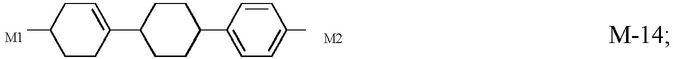 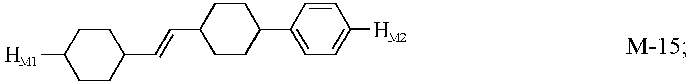 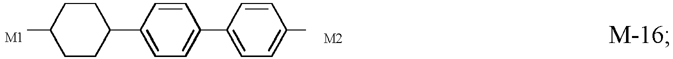 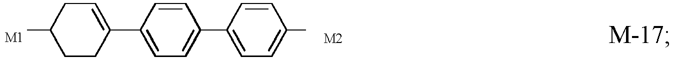 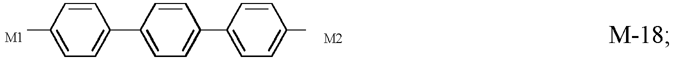 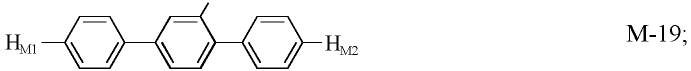 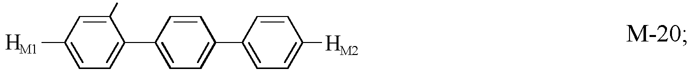 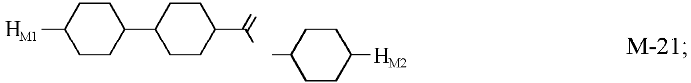 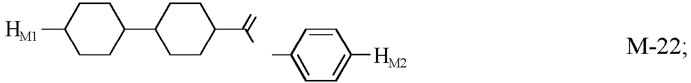 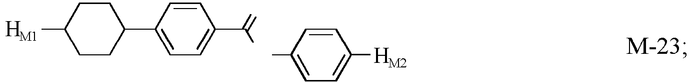 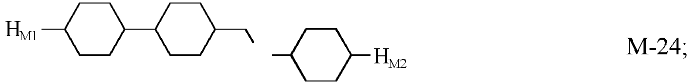 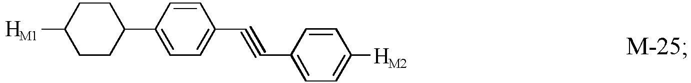 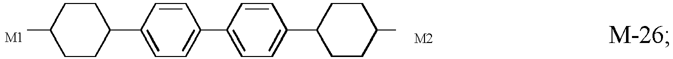 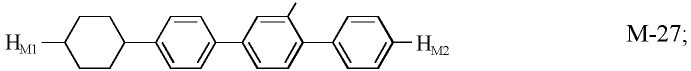 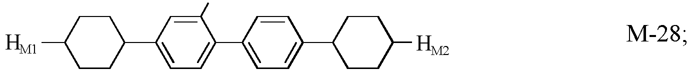 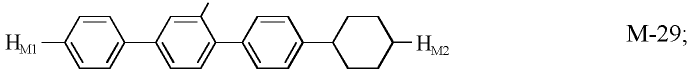 and

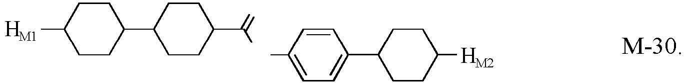

In some embodiments of the present invention, the compound of general formula M provides 0.1-90 wt.% of the total weight of the second liquid crystal composition (including any of the numerical values or sub-ranges therebetween), for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, 52 wt.%, 54 wt.%, 56 wt.%, 58 wt.%, 60 wt.%, 62 wt.%, 64 wt.%, 66 wt.%, 68 wt.%, 70 wt.%, 72 wt.%, 74 wt.%, 76 wt.%, 78 wt.%, 80 wt.%, or a range between any two numerical values of these; preferably, the compound of general formula M provides 1-80 wt.% of the total weight of the second liquid crystal composition.

In some embodiments of the present invention, in order to obtain a better viewing angle display effect in the wide viewing angle mode and a better peep-proofing effect in the single-side viewing angle peep-proofing mode, the compound of general formula M is selected from the group consisting of the compound of general formula M-1, the compound of general formula M-2, the compound of general formula M-6, the compound of general formula M-12, the compound of general formula M-16, the compound of general formula M-19, the compound of general formula M-26, and the compound of general formula M-29.

In some embodiments of the present invention, in order to obtain a better viewing angle display effect in the wide viewing angle mode and a better peep-proofing effect in the single-side viewing angle peep-proofing mode, the compound of general formula M includes at least two compounds selected from the group consisting of the compound of general formula M-1, the compound of general formula M-12, the compound of general formula M-16, and the compound of general formula M-29.

In some embodiments of the present invention, in order to obtain a better viewing angle display effect in the wide viewing angle mode and a better peep-proofing effect in the single-side viewing angle peep-proofing mode, the compound of general formula M includes at least two compounds of the general formula M-1, preferably, includes at least one (for example, two, three) compound of general formula M-1 of which R_{M1} and R_{M2} each independently is C₂₋₅ alkenyl.

In some embodiments of the present invention, in order to obtain a better viewing angle display effect in the wide viewing angle mode and a better peep-proofing effect in the single-side viewing angle peep-proofing mode, the compound of general formula M includes at least two compounds of the general formula M-12, preferably, includes at least one (for example, two, three) compound of the general formula M-12 of which R_{M1} and R_{M2} each independently is C₂₋₅ alkenyl.

In some embodiments of the present invention, in order to obtain a better viewing angle display effect in the wide viewing angle mode and a better peep-proofing effect in the single-side viewing angle peep-proofing mode, the compound of general formula M includes at least two compounds of general formula M-16, preferably, includes at least one (for example, two, three) compound of general formula M-16 of which R_{M1} and R_{M2} each independently is C₂₋₅ alkenyl.

In some embodiments of the present invention, preferably, R_{M1} and R_{M2} each independently is C₁₋₁₀ linear or branched alkyl, C₁₋₉ linear or branched alkoxy, or C₂₋₁₀ linear or branched alkenyl; further preferably, R_{M1} and R_{M2} each independently is C₁₋₈ linear or branched alkyl, C₁₋₇ linear or branched alkoxy, or C₂₋₈ linear or branched alkenyl; still further preferably, R_{M1} and R_{M2} each independently is C₁₋₅ linear or branched alkyl, C₁₋₄ linear or branched alkoxy, or C₂₋₅ linear or branched alkenyl.

In some embodiments of the present invention, preferably, R_{M1} and R_{M2} each independently is C₂₋₈ linear alkenyl; further preferably, each independently is C₂₋₅ linear alkenyl.

In some embodiments of the present invention, preferably, one of R_{M1} and R_{M2} is C₂₋₅ linear alkenyl and the other is C₁₋₅ linear alkyl.

In some embodiments of the present invention, preferably, R_{M1} and R_{M2} each independently is C₁₋₈ linear alkyl, or C₁₋₇ linear alkoxy; further preferably, each independently is C₁₋₅ linear alkyl, or C₁₋₄ linear alkoxy.

In some embodiments of the present invention, preferably, one of R_{M1} and R_{M2} is C₁₋₅ linear alkyl, and the other is C₁₋₅ linear alkyl, or C₁₋₄ linear alkoxy; further preferably, R_{M1} or R_{M2} each independently is C₁₋₅ linear alkyl.

In some embodiments of the present invention, it is preferred that both R_{M1} and R_{M2} are alkyl when reliability is valued; it is preferred that both R_{M1} and R_{M2} are alkoxy when reducing volatility of the compound is valued, and it is preferred that at least one of R_{M1} and R_{M2} is alkenyl when reducing viscosity is valued.

In some embodiments of the present invention, in the dye liquid crystal panel, the second liquid crystal composition further comprises at least one compound of general formula A-1 and/or general formula A-2: 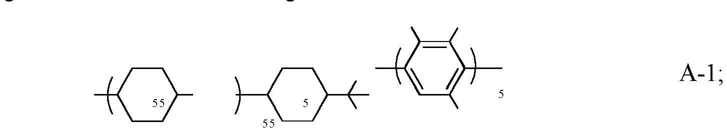 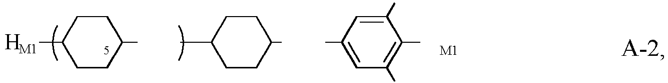 wherein,
R_{A1} and R_{A2} each independently represents C₁₋₁₂ linear or branched alkyl, 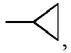 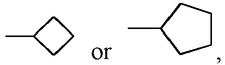 one or more than two nonadjacent -CH₂- in the C₁₋₁₂ linear or branched alkyl can each be independently replaced by -CH=CH-, -C≡C-, -O-, -CO-, -CO-O- or -O-CO-, and one or more -H in the C₁₋₁₂ linear or branched alkyl, 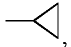 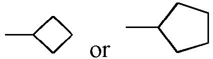 can each be independently substituted by -F or -Cl;
ring 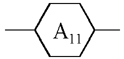 , ring 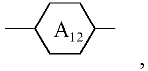 ring 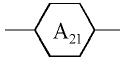 and ring 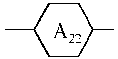 each independently represents 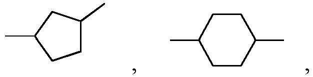 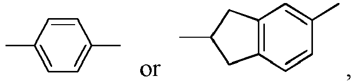 wherein one or more -CH₂- in 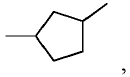 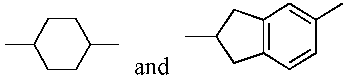 can be replaced by -O-, one or more single bond in the rings can be replaced by double bond, wherein one or more -H on 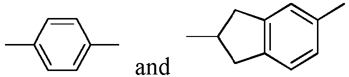 can each be independently substituted by -F, -Cl or -CN, one or more -CH= in the rings can be replaced by -N=;
Z_{A11}, Z_{A21} and Z_{A22} each independently represents single bond, -CH₂CH₂-, -CF₂CF₂-, -CO-O-, -O-CO-, -O-CO-O-, -CH=CH-, -CF=CF-, -CH₂O- or -OCH₂-;
L_{A11}, L_{A12}, L_{A13}, L_{A21} and L_{A22} each independently represents -H, C₁₋₃ alkyl or halogen;
X_{A1} and X_{A2} each independently represents halogen, C₁₋₅ halogenated alkyl, or halogenated alkoxy, C₂₋₅ halogenated alkenyl or halogenated alkenoxy;
n_{A11} represents 0, 1, 2 or 3, when n_{A11}=2 or 3, ring 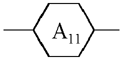 can be same or different, and Z_{A11} can be same or different;
n_{A12} represents 1 or 2, wherein when n_{A12}=2, ring 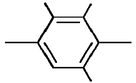 can be same or different; and
n_{A2} represents 0, 1, 2 or 3, wherein when n_{A2}=2 or 3, ring 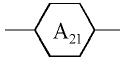 can be same or different, and Z_{A21} can be same or different.

In some embodiments of the present invention, at least one compound of general formula A-1 and/or general formula A-2 provides 0.1-60 wt.% of the total weight of the second liquid crystal composition (including any of the numerical values or sub-ranges therebetween), for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, 52 wt.%, 54 wt.%, 56 wt.%, 58 wt.%, 60 wt.%, or a range between any two numerical values of these.

In some embodiments of the present invention, the compound of general formula A-1 is selected from a group consisting of the following compounds: 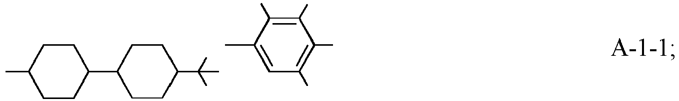 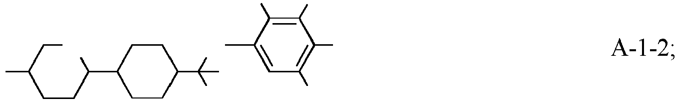 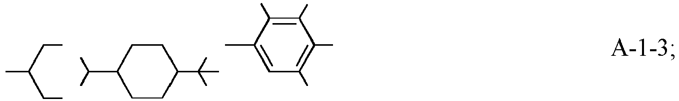 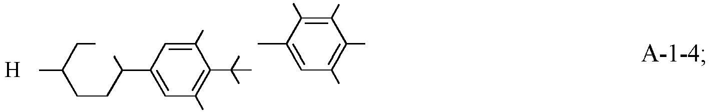 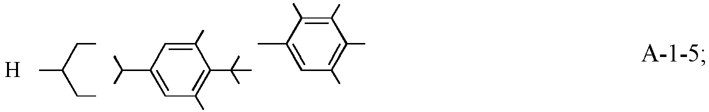 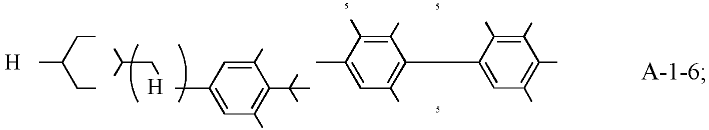 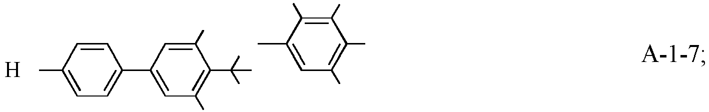 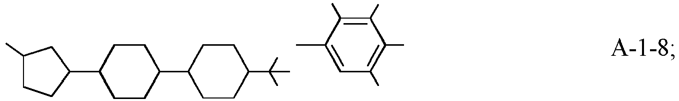 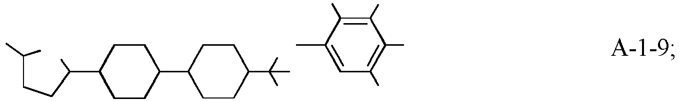 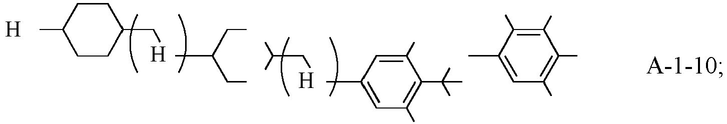 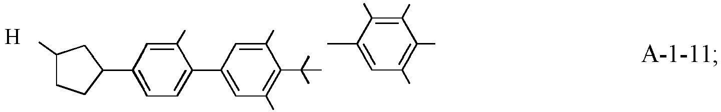 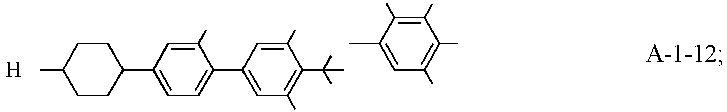 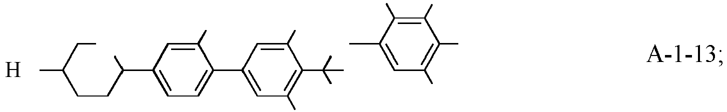 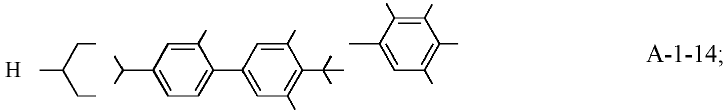 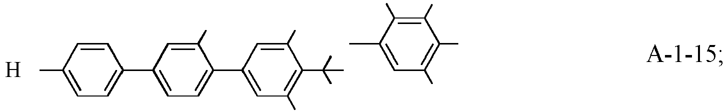 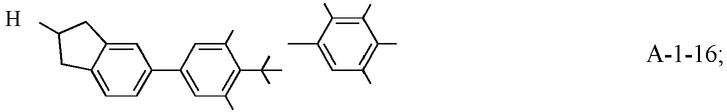 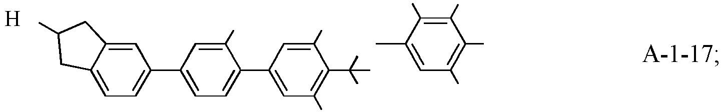 and 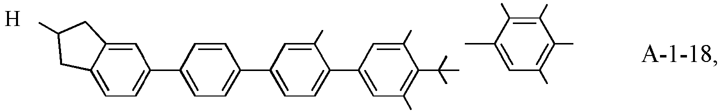 wherein,
R_{A1} represents C₁₋₈ linear or branched alkyl, one or more than two nonadjacent -CH₂- in the C₁₋₈ linear or branched alkyl can each be independently replaced by -CH=CH-, -C≡C-, -O-, -CO-, -CO-O- or -O-CO-, and one or more -H in C₁₋₈ linear or branched alkyl can each be independently substituted by -F or -Cl;
Rᵥ and R_{w} each independently represents -CH₂- or -O-;
L_{A11}, L_{A12}, L_{A11}', L_{A12}', L_{A14}, L_{A15} and L_{A16} each independently represents -H or -F;
L_{A13} and L_{A13}' each independently represents -H or -CH₃;
X_{A1} represents -F, -CF₃ or -OCF₃; and
v and w each independently represents 0 or 1.

In some embodiments of the present invention, in order to obtain a better viewing angle display effect in the wide viewing angle mode and a better peep-proofing effect in the single-side viewing angle peep-proofing mode, the compound of general formula A-1 is selected from the group consisting of the compound of general formula A-1-1, the compound of general formula A-1-7, and the compound of general formula A-1-15.

In some embodiments of the present invention, in order to obtain a better viewing angle display effect in the wide viewing angle mode and a better peep-proofing effect in the single-side viewing angle peep-proofing mode, the compound of general formula A-1 comprises at least two (for example, three, four) compounds of general formula A-1-15.

In some embodiments of the present invention, the compound of general formula A-1 provides 0.1-50 wt.% (including any of the numerical values or sub-ranges therebetween) of the total weight of the second liquid crystal composition, for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, or a range between any two numerical values of these; preferably, the compound of general formula A-1 provides 0.1-40 wt.% of the total weight of the second liquid crystal composition.

In some embodiments of the present invention, the compound of general formula A-2 is selected from a group consisting of the following compounds: 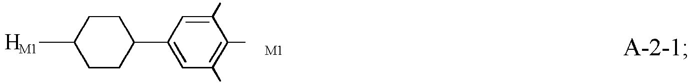 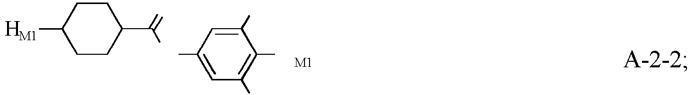 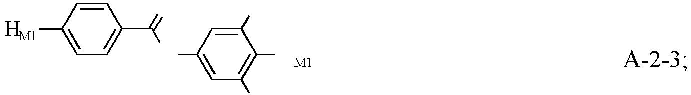 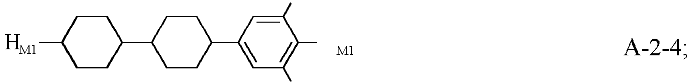 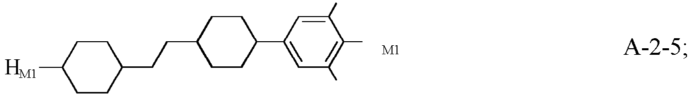 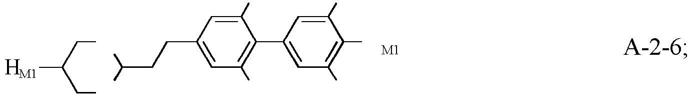 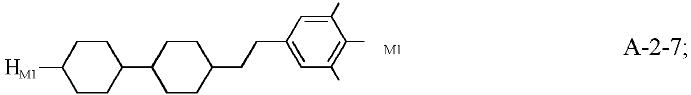 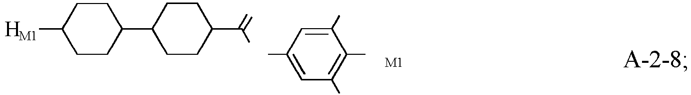 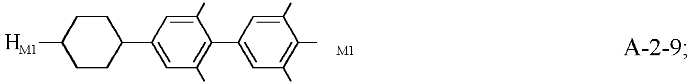 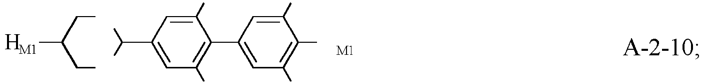 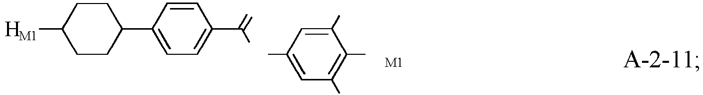 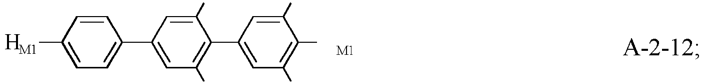 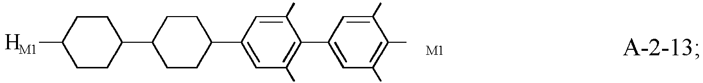 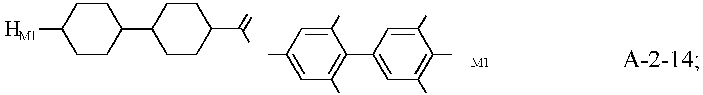 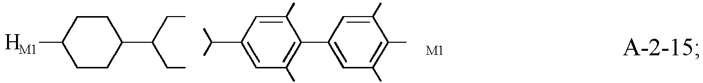 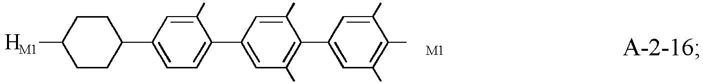 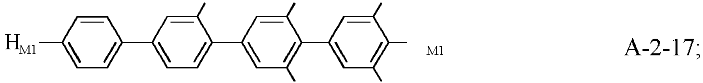 and 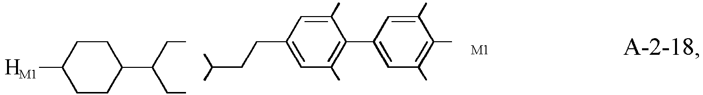 wherein,
R_{A2} represents C₁₋₈ linear or branched alkyl, one or more than two nonadjacent -CH₂- in the C₁₋₈ linear or branched alkyl can each be independently replaced by -CH=CH-, -C≡C-, -O-, -CO-, -CO-O- or -O-CO-, and one or more -H in the C₁₋₈ linear or branched alkyl can each be independently substituted by -F or -Cl;
L_{A21}, L_{A22}, L_{A23}, L_{A24} and L_{A25} each independently represents -H or -F; and
X_{A2} represents -F, -CF₃, -OCF₃ or -CH₂CH₂CH=CF₂.

In some embodiments of the present invention, in order to obtain a better viewing angle display effect in the wide viewing angle mode and a better peep-proofing effect in the single-side viewing angle peep-proofing mode, the compound of general formula A-2 is selected from the group consisting of the compound of general formula A-2-1, the compound of general formula A-2-4, the compound of general formula A-2-6, the compound of general formula A-2-12, the compound of general formula A-2-13, the compound of general formula A-2-15, the compound of general formula A-2-17, and the compound of general formula A-2-18.

In some embodiments of the present invention, in order to obtain a better viewing angle display effect in the wide viewing angle mode and a better peep-proofing effect in the single-side viewing angle peep-proofing mode, the compound of general formula A-2 comprises at least one compound of the general formula A-2-4 or general formula A-2-12.

In some embodiments of the present invention, the compound of general formula A-2 provides 0.1-50 wt.% (including any of the numerical values or sub-ranges therebetween) of the total weight of the second liquid crystal composition, for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, or a range between any two numerical values of these.

In some embodiments of the present invention, in order to obtain a better peep-proofing effect in the narrow viewing angle and to enhance the mutual solubility of the second liquid crystal composition and the dye, in the dye liquid crystal panel, the second liquid crystal composition comprises at least one compound of general formula A-1 and general formula A-2.

In some embodiments of the present invention, in the dye liquid crystal panel, the second liquid crystal composition further comprises at least one compound of general formula N: 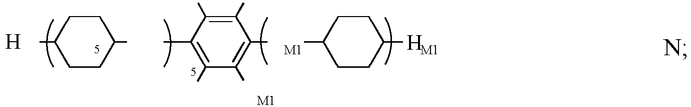 wherein,
R_{N1} and R_{N2} each independently represents C₁₋₁₂ linear or branched alkyl, 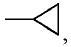 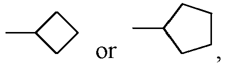 wherein one or more than two nonadjacent -CH₂- in the C₁₋₁₂ linear or branched alkyl can each be independently replaced by -CH=CH-, -C≡C-, -O-, -CO-, -CO-O- or -O-CO-;
ring 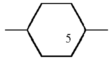 and ring 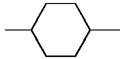 each independently represents 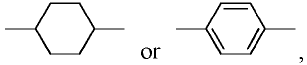 wherein one or more -CH₂- in 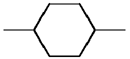 can be replaced by -O-, one or more single bond in the rings can be replaced by double bond, wherein one or more -H on 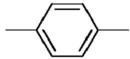 can each be independently substituted by -F, -Cl or -CN, and one or more -CH= in the rings can be replaced by -N=;
Z_{N1} and Z_{N2} each independently represents single bond, -CO-O-, -O-CO-, -CH₂O-, -OCH₂-, -CH=CH-, -C≡C-, -CH₂CH₂-, -CF₂CF₂-, -(CH₂)₄-, -CF₂O- or -OCF₂-;
L_{N1} and L_{N2} each independently represents -H, halogen, C₁₋₃ alkyl, or C₁₋₃ alkoxy; and
n_{N1} represents 0, 1, 2 or 3, n_{N2} represents 0 or 1, and 0≤n_{N1}+n_{N2}≤3, when n_{N1}=2 or 3, ring 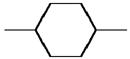 can be the same or different, and Z_{N1} can be the same or different.

In some embodiments of the present invention, the compound of general formula N is selected from a group consisting of the following compounds: 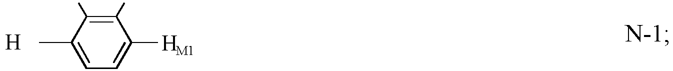 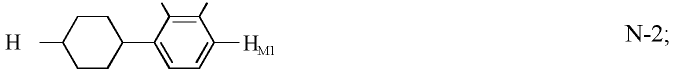 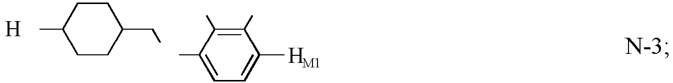 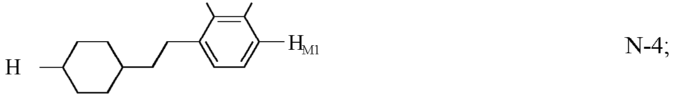 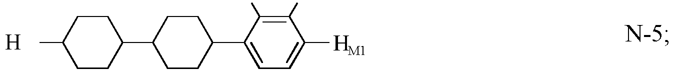 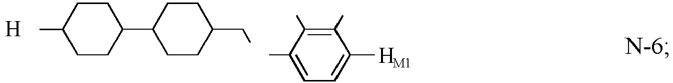 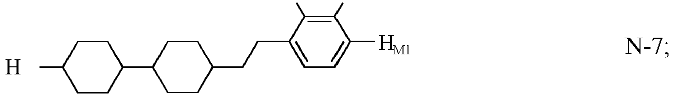 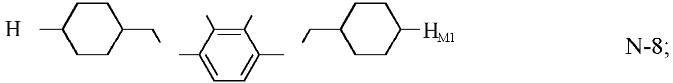 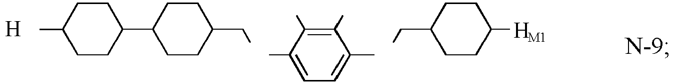 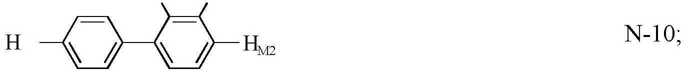 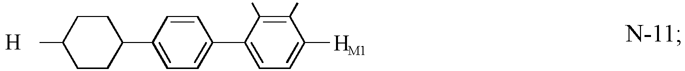 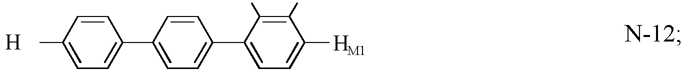 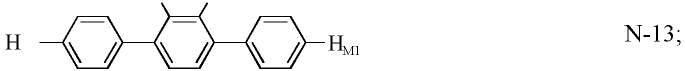 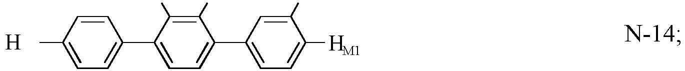 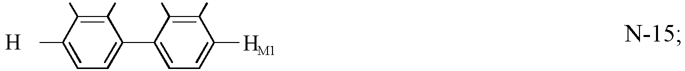 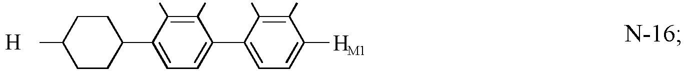 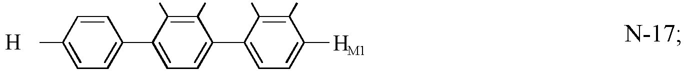 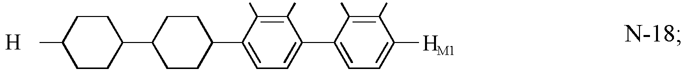 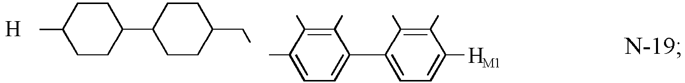 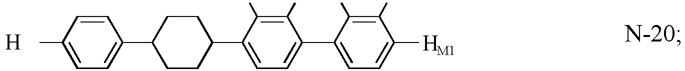 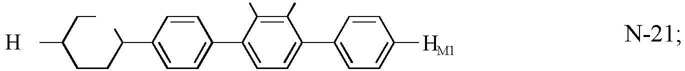 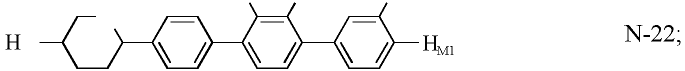 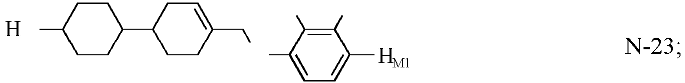 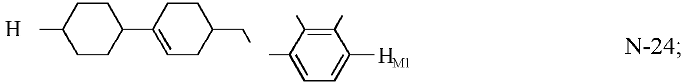 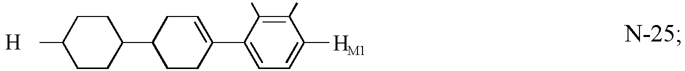 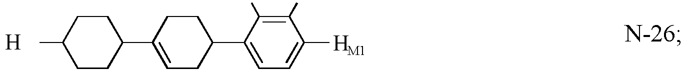 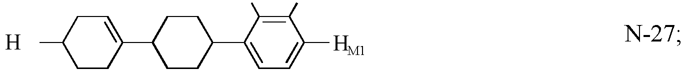 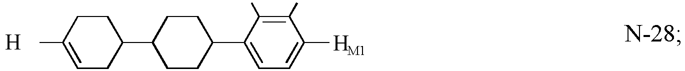 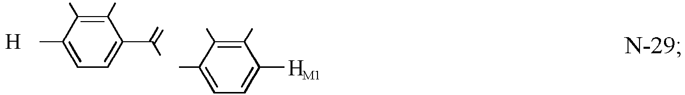 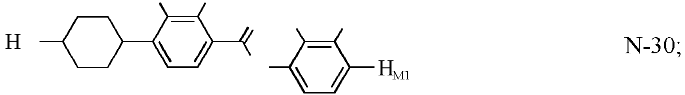 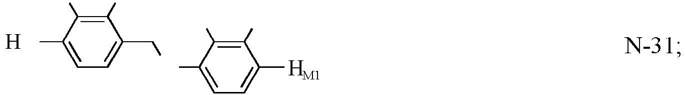 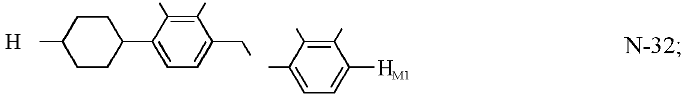 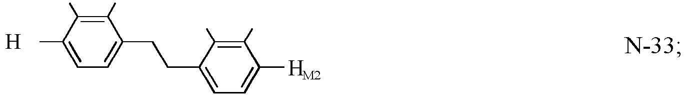 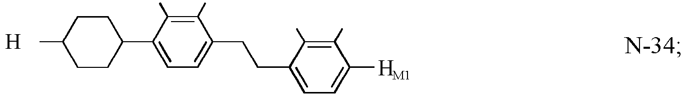 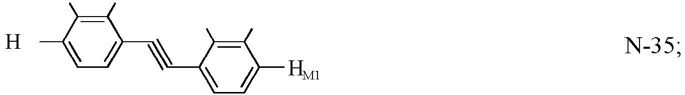 and

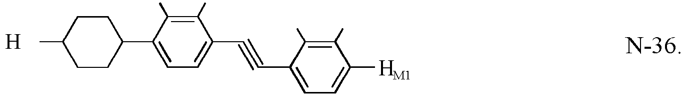

In some embodiments of the present invention, the compound of general formula N provides 0.1-60 wt.% (including any of the numerical values or sub-ranges therebetween) of the total weight of the second liquid crystal composition, for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, 52 wt.%, 54 wt.%, 56 wt.%, 58 wt.%, 60 wt.% or a range between any two numerical values of these; preferably, the compound of general formula N provides 1-55 wt.% of the total weight of the second liquid crystal composition.

In some embodiments of the present invention, preferably, R_{N1} and R_{N2} each independently represents C₁₋₁₀ linear or branched alkyl, C₁₋₉ linear or branched alkoxy, or C₂₋₁₀ linear or branched alkenyl; further preferably, R_{N1} and R_{N2} each independently represents C₁₋₈ linear or branched alkyl, C₁₋₇ linear or branched alkoxy, or C₂₋₈ linear or branched alkenyl; still further preferably, R_{N1} and R_{N2} each independently represents C₁₋₅ linear or branched alkyl, C₁₋₄ linear or branched alkoxy, or C₂₋₅ linear or branched alkenyl.

In some embodiments of the present invention, in a dye liquid crystal panel, the second liquid crystal composition further comprises at least one compound of general formula F: 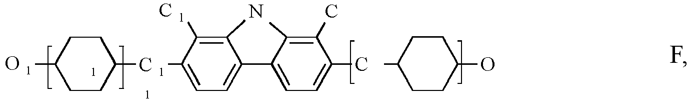 wherein,
R_{F1} and R_{F2} each independently represents -H, halogen, C₁₋₁₂ linear or branched alkyl, 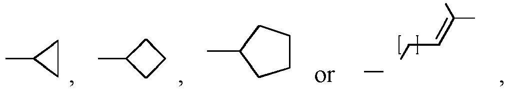 one or more than two nonadjacent -CH₂- in the C₁₋₁₂ linear or branched alkyl, 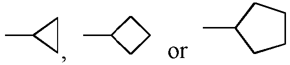 can each be independently replaced by -C≡C-, -O-, -S-, -CO-, -CO-O- or -O-CO-, and one or more -H in the C₁₋₁₂ linear or branched alkyl can each be independently substituted by -F or -Cl;
ring 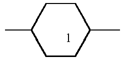 and ring 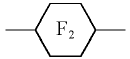 each independently represents 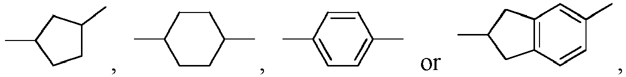 wherein one or more -CH₂- in 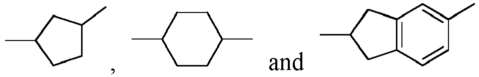 can be replaced by -O-, and one or more single bond in the rings can be replaced by double bond, wherein one or more -H on 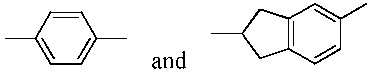 can each be independently substituted by -CN, -F or -Cl, and one or more -CH= in the rings can be replaced by -N=;
X_{F} represents -O-, -S- or -CO-; L_{F1} and L_{F2} each independently represents -H, -F, -Cl, -CF₃ or -OCF₃;
Z_{F1} and Z_{F2} each independently represents single bond, -O-, -CO-O-, -O-CO-, -CH₂O-, -OCH₂-, -CH=CH-, -C≡C-, -CH₂CH₂-, -CF₂CF₂-, -(CH₂)₄-, -CF₂O- or -OCF₂-;
n_{F1} and n_{F2} each independently represents 0, 1 or 2, wherein, when n_{F1} represents 2, ring 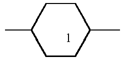 can be same or different, wherein when n_{F2} represents 2, ring 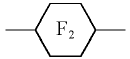 can be same or different, and Z_{F2} can be same or different; and
n_{F4} represents an integer of 0-4.

In some embodiments of the present invention, the compound of general formula F is selected from a group consisting of the following compounds: 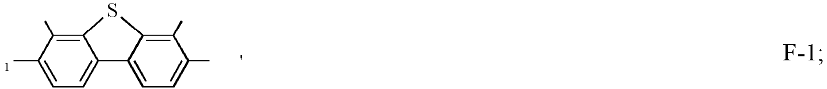 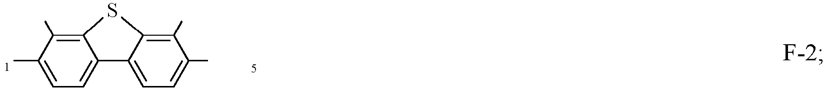 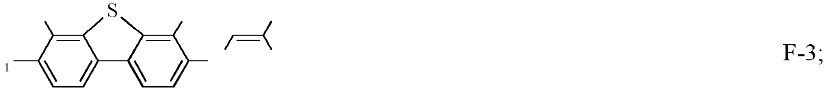 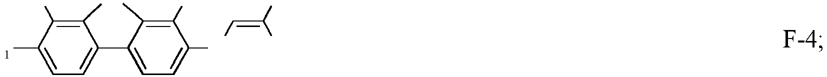 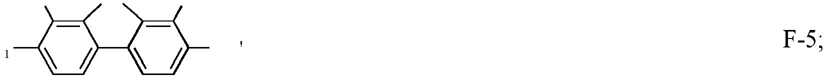 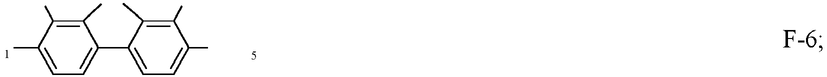 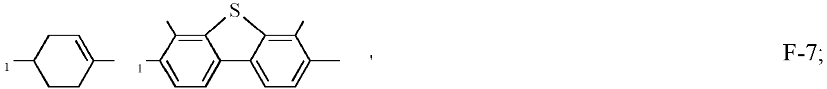 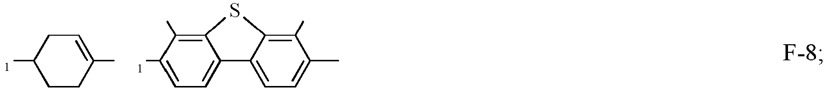 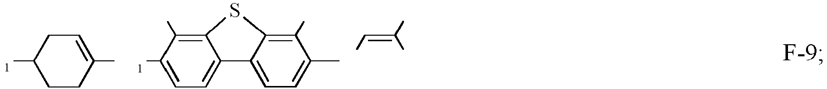 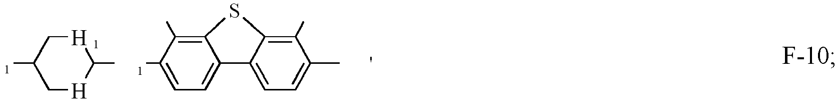 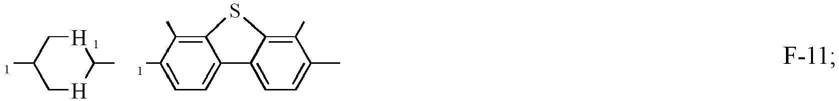 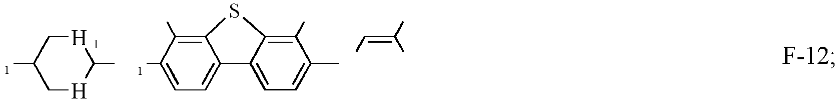 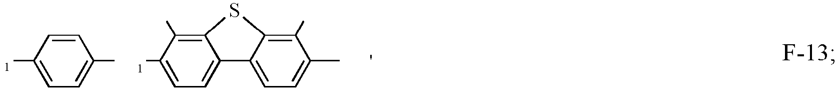 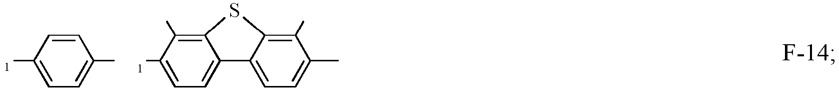 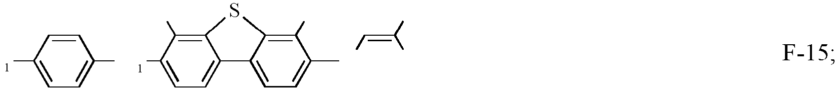 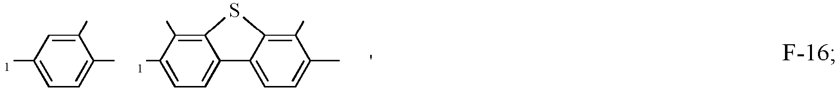 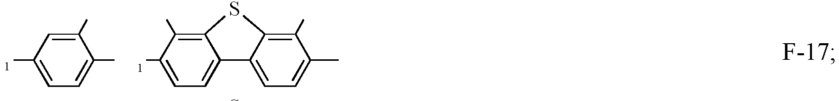 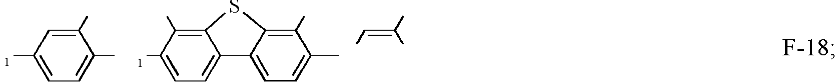 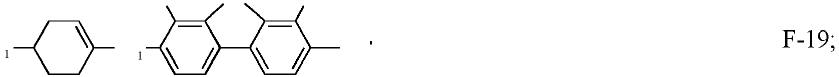 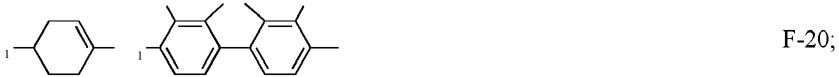 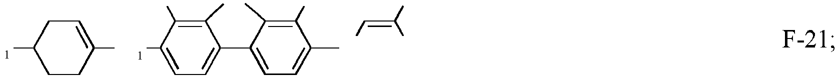 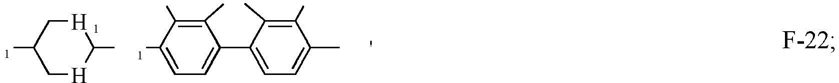 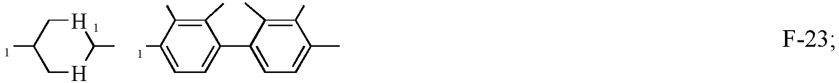 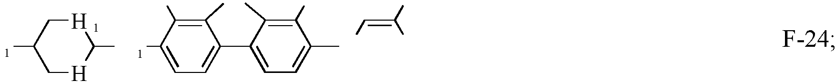 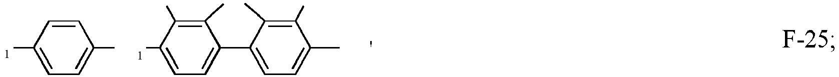 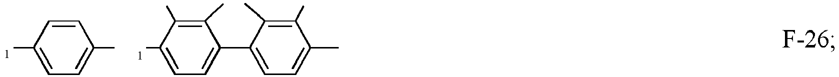 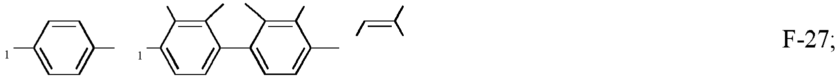 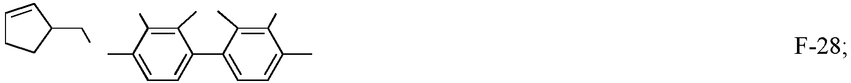 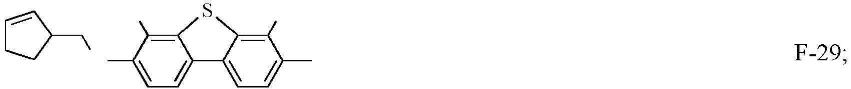 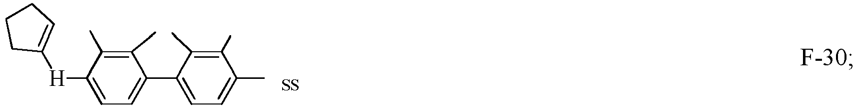 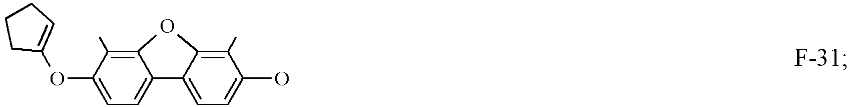 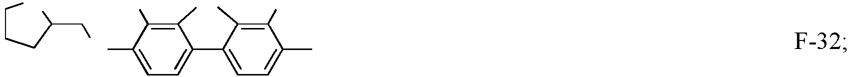 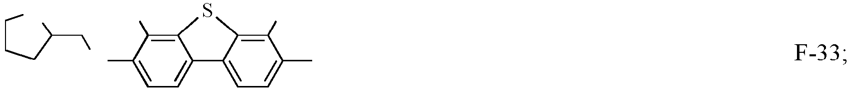 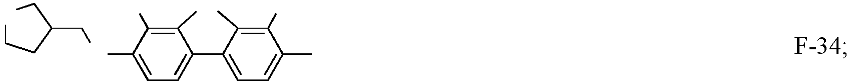 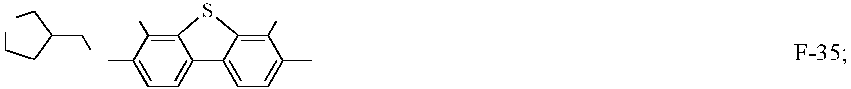 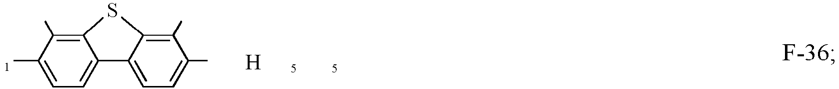 and 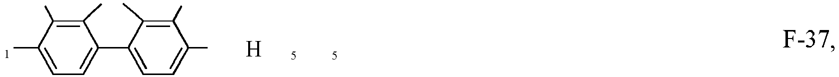 wherein,
R_{F2}' represents C₁₋₁₁ linear or branched alkoxy;
X_{F1} and X_{F2} each independently represents -CH₂- or -O-;
n_{F3} represents an integer of 1-5 (for example, 1, 2, 3, 4 or 5); and
R_{F3} represents C₁₋₅ linear or branched alkyl, or C₁₋₄ linear or branched alkoxy, or C₂₋₅ linear or branched alkenyl.

In some embodiments of the present invention, the compound of general formula F provides 0.1-30 wt.% (including any of the numerical values or sub-ranges therebetween) of the total weight of the second liquid crystal composition, for example, 0.1 wt.%, 0.5 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.% or a range between any two numerical values of these; preferably, 0.1-25 wt.%.

In some embodiments of the present invention, in a dye liquid crystal panel, the second liquid crystal composition further comprises at least one polymerizable compound of general formula RM: 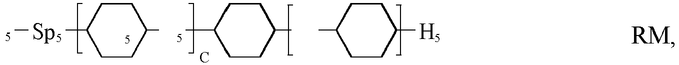 wherein,
ring 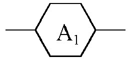 and ring 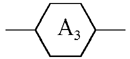 each independently represents 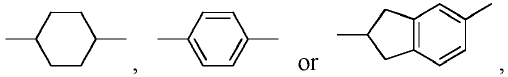 wherein one or more -CH₂- in 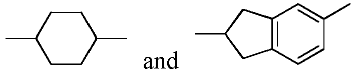 can be replaced by -O-, and one or more single bond in the rings can be replaced by double bond, wherein one or more -H on 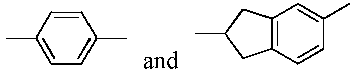 can each be independently substituted by -F, -Cl, -CN, -Sp₃-P₃, C₁₋₁₂ halogenated or unhalogenated linear alkyl, C₁₋₁₁ halogenated or unhalogenated linear alkoxy, 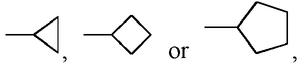 and one or more -CH= in the rings can be replaced by -N=;
ring 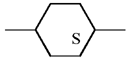 represents 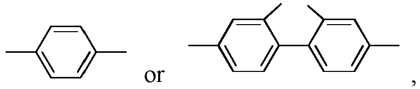 wherein one or more -H on 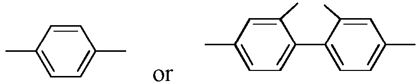 can each be independently substituted by -F, -Cl, -CN, -Sp₃-P₃, C₁₋₁₂ halogenated or unhalogenated linear alkyl, C₁₋₁₁ halogenated or unhalogenated linear alkoxy, 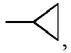 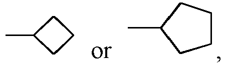 and one or more -CH= in the rings can be replaced by -N=;
R₁ represents -H, halogen, -CN, -Sp₂-P₂, C₁₋₁₂ (for example, it can be C₁, C₂, C₃, C₄, C₅, C₆, C₇, C₈, C₉, C₁₀, C₁₁, or C₁₂) linear or branched alkyl, 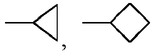 or 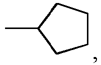 wherein one or more than two nonadjacent -CH₂- in the C₁₋₁₂ linear or branched alkyl, 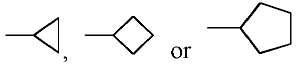 can each be independently replaced by -CH=CH-, -C≡C-, -O-, -CO-, -CO-O- or -O-CO-, and one or more -H can each be independently substituted by -F or -Cl;
P₁, P₂ and P₃ each independently represents a polymerizable group;
Sp₁, Sp₂ and Sp₃ each independently represents a spacer group or single bond;
X₀ represents -O-, -S- or -CO-;
Z₁ and Z₂ each independently represents -O-, -S-, -CO-, -CO-O-, -O-CO-, -O-CO-O-, -CH₂O-, -OCH₂-, -CH₂S-, -SCH₂-, -CF₂O-, -OCF₂-, -CF₂S-, -SCF₂-, -(CH₂)_{d}-, -CF₂CH₂-, -CH₂CF₂-, -(CF₂)_{d}-, -CH=CH-, -CF=CF-, -CH=CF-, -CF=CH-, -C≡C-, -CH=CH-CO-O-, -O-CO-CH=CH-, -CH₂CH₂-CO-O-, -O-CO-CH₂CH₂-, -CHR¹-, -CR¹R²- or single bond, wherein R¹ and R² each independently represents C₁₋₁₂ linear or branched alkyl, and d represents an integer of 1-4; and
a represents 0, 1 or 2, b represents 0 or 1, wherein when a represents 2, ring 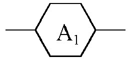 can be same or different, and Z₁ can be same or different.

In some embodiments of the present invention, the polymerizable compound of general formula RM is selected from a group consisting of the following compounds: 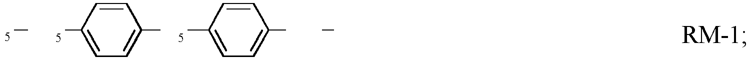 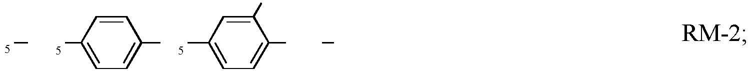 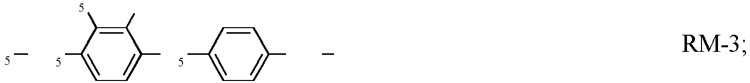 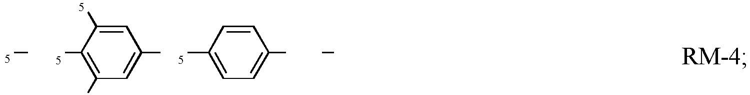 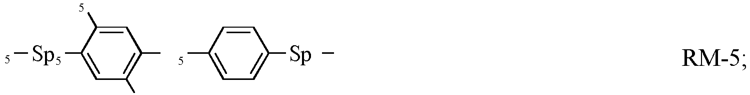 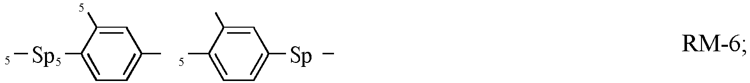 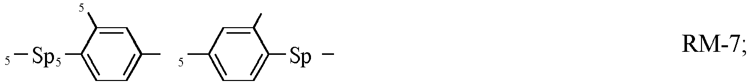 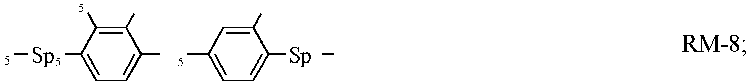 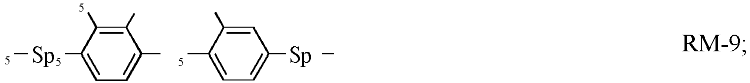 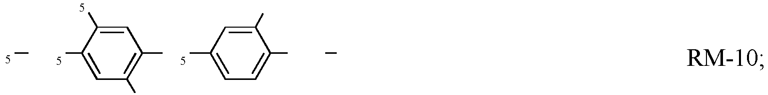 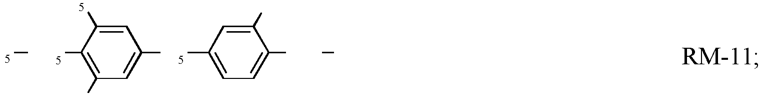 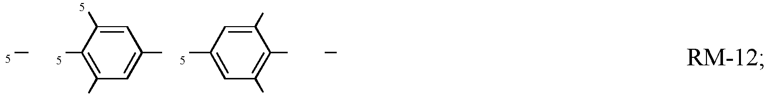 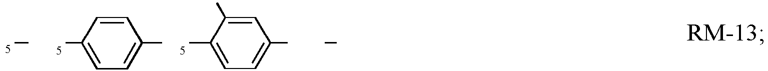 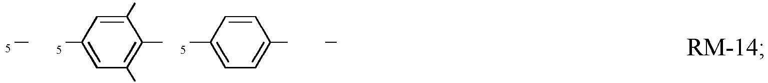 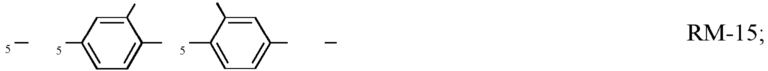 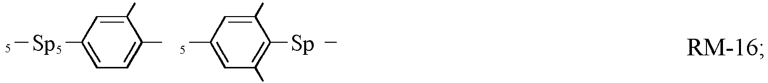 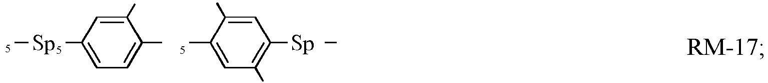 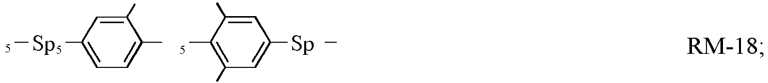 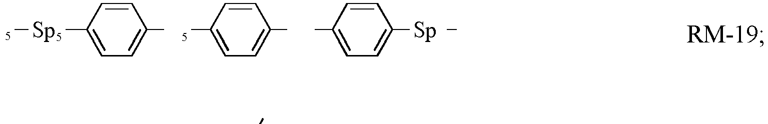 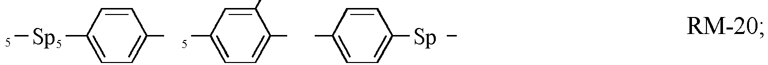 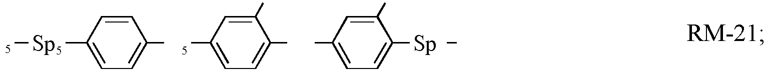 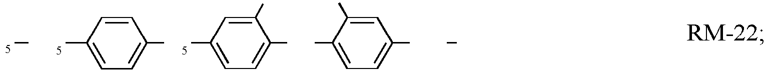 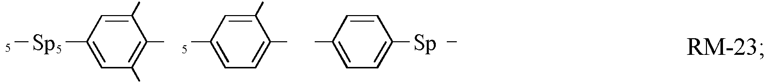 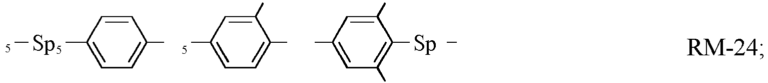 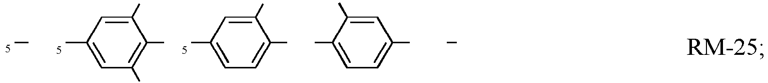 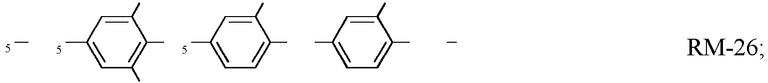 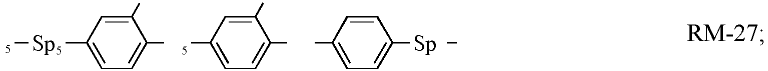 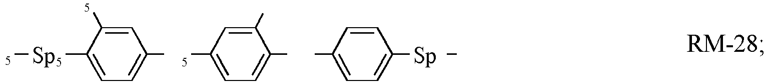 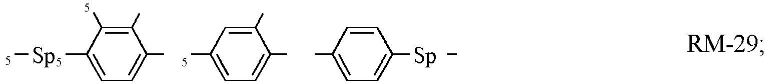 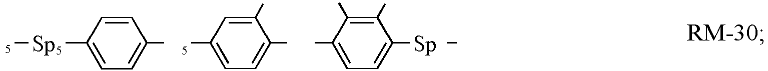 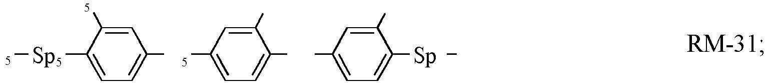 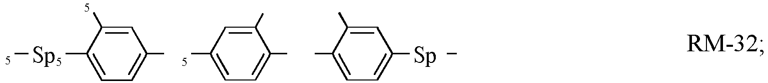 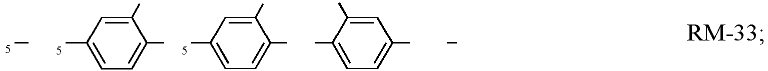 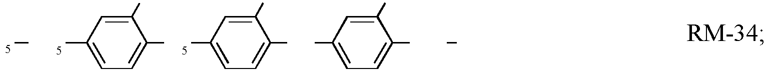 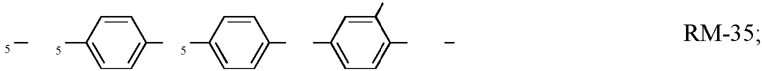 and 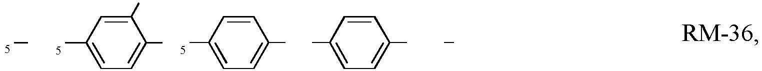 wherein,
X₁-X₁₀ and X₁₂ each independently represents -F, -Cl, -Sp₃-P₃, C₁₋₅ linear alkyl or alkoxy,

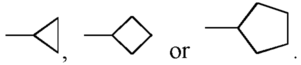

In some embodiments of the present invention, X₁-X₁₀ and X₁₂ each independently represents -F, -Cl, -Sp₃-P₃, -CH₃, or -OCH₃.

In some embodiments of the present invention, both of Sp₁ and Sp₂ represent a single bond.

The polymerizable groups involved in the present invention are groups suitable for polymerization reactions (for example, free radical or ionic bond polymerization, addition polymerization or condensation polymerization), or groups suitable for addition or condensation on the polymer backbone. For chain polymerization, a polymerizable group containing -CH=CH- or -C≡C- is particularly preferred, and for ring-opening polymerization, for example, an oxetanyl or epoxy group is particularly preferred.

In some embodiments of the present invention, the polymerizable groups P₁, P₂, P₃ each independently represents 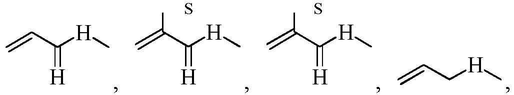 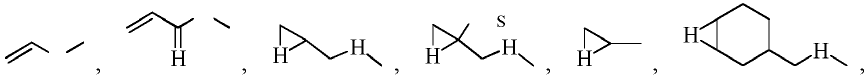 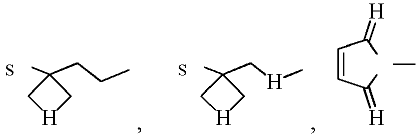 or -SH; preferably, the polymerizable groups P₁, P₂, P₃ each independently represents 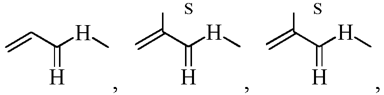 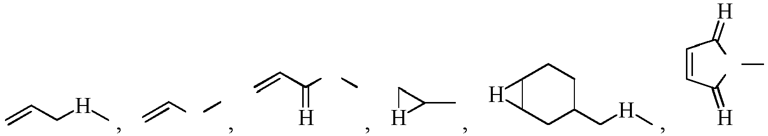 or -SH; further preferably, the polymerizable groups P₁, P₂, P₃ each independently represents

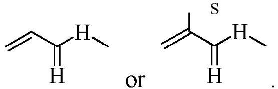

The term "spacer group" as used herein, is known to the person skilled in the art and is described in the references (for example, Pure Appl. Chem. 2001, 73(5), 888 and C. Tschierske, G. Pelzl, S. Diele, Angew. Chem. 2004, 116, 6340-6368). As used herein, the term "spacer group" represents a flexible group which connects the mesogenic group and the polymerizable group in a polymerizable compound. For example, -(CH₂)p₁-, -(CH₂CH₂O)q₁-CH₂CH₂-, -(CH₂CH₂S)q₁-CH₂CH₂-, -(CH₂CH₂NH)q₁-CH₂CH₂-, -CR⁰R⁰⁰-(CH₂)p₁- or -(SiR⁰R⁰⁰-O)p₁- are representative spacer groups, wherein p₁ represents an integer of 1-12 (for example, 1, 2, 3, 4, 5, 6, 7, 8, 9, 10, 11, or 12), q₁ represents an integer of 1-3 (for example, 1, 2, or 3), R⁰ and R⁰⁰ each independently represents -H, C₁₋₁₂ (for example, C₁, C₂, C₃, C₄, C₅, C₆, C₇, C₈, C₉, C₁₀, C₁₁, or C₁₂) linear or branched alkyl, or C₃₋₁₂ (for example, C₃, C₄, C₅, C₆, C₇, C₈, C₉, C₁₀, C₁₁, or C₁₂) cyclic alkyl. The particularly preferred spacer group is -(CH₂)p₁-, -(CH₂)p₁-O-, -(CH₂)p₁-O-CO-, -(CH₂)p₁-CO-O-, -(CH₂)p₁-O-CO-O- or -CR⁰R⁰⁰-(CH₂)p₁-.

In some embodiments of the present invention, the polymerizable compound of general formula RM provides 0.001-5 wt.% (including any of the numerical values or sub-ranges therebetween) of the total weight of the second liquid crystal composition, for example, 0.001 wt.%, 0.002 wt.%, 0.004 wt.%, 0.005 wt.%, 0.006 wt.%, 0.008 wt.%, 0.01 wt.%, 0.02 wt.%, 0.04 wt.%, 0.06 wt.%, 0.08 wt.%, 0.1 wt.%, 0.2 wt.%, 0.25 wt.%, 0.26 wt.%, 0.27 wt.% , 0.28 wt.%, 0.29 wt.%, 0.3 wt.%, 0.32 wt.%, 0.33 wt.%, 0.34 wt.%, 0.35 wt.%, 0.4 wt.%, 0.5 wt.%, 0.6 wt.%, 0.8 wt.%, 1 wt.%, 1.2 wt.%, 1.6 wt.%, 1.8 wt.%, 2 wt.%, 2.5 wt.%, 3 wt.%, 3.5 wt.%, 4 wt.%, 4.5 wt.%, 5 wt.%, or a range between any two numerical values of these.

In some embodiments of the present invention, in a dye liquid crystal panel, the second liquid crystal composition further comprises at least one self-aligning agent of general formula SA: 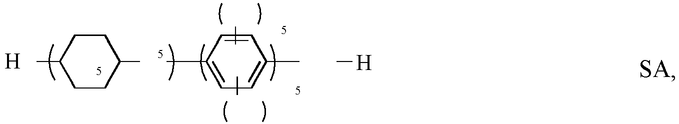 wherein,
R_{S1} represents -Sp¹-P¹, C₁₋₁₂ (for example, it can be C₁, C₂, C₃, C₄, C₅, C₆, C₇, C₈, C₉, C₁₀, C₁₁, or C₁₂) linear or branched alkyl, 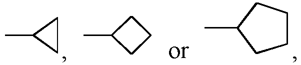 wherein one or more than two nonadjacent -CH₂- in the C₁₋₁₂ linear or branched alkyl can each be independently replaced by -CH=CH-, -C≡C-, -O-, -CO-, -CO-O- or -O-CO-, and one or more -H in the C₁₋₁₂ linear or branched alkyl, 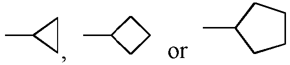 can each be independently substituted by -F or -Cl;
ring 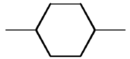 represents 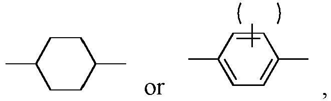 wherein one or more -CH₂- in 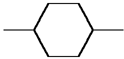 can be replaced by -O-, and one or more single bond in the rings can be replaced by double bond;
Ls₁ and Ls₃ each independently represents -F, -Cl, -CN, -NO₂, -NCO, -NCS, -OCN, -SCN, -C(O)N(R^{S0})₂, -C(O)R^{S0}, C₁₋₁₂ (for example, it can be C₁, C₂, C₃, C₄, C₅, C₆, C₇, C₈, C₉, C₁₀, C₁₁, or C₁₂) linear or branched alkyl, 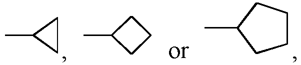 wherein one or more than two nonadjacent -CH₂- in the C₁₋₁₂ linear or branched alkyl can each be independently replaced by -CH=CH-, -C≡C-, -O-, -CO-, -CO-O- or -O-CO-, and one or more -H in the C₁₋₁₂ linear or branched alkyl, 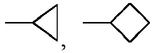 or 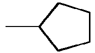 can each be independently substituted by -F, wherein R^{S0} represents C₁₋₁₂ (for example, C₁, C₂, C₃, C₄, C₅, C₆, C₇, C₈, C₉, C₁₀, C₁₁, or C₁₂) linear or branched alkyl;
Ls₂ represents - - or 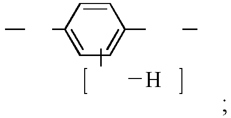
R_{S2} and R_{S3} each independently represents anchoring group, the anchoring group is 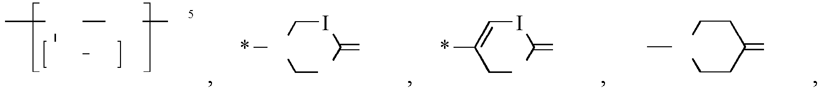 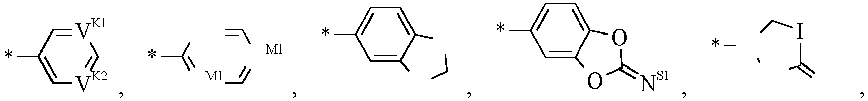 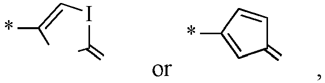 in which, * represents binding site in the bound structure;
p represents 1 or 2, wherein when p represents 2, - -N can be the same or different;
o represents 0 or 1;
M^{S1} represents 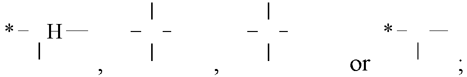
I^{S1} and J^{S1} each independently represents -CH₂-, -O- and -S-;
N^{S1} represents =O or =S;
V^{K1}, V^{K2} and V^{K3} each independently represents -CH= or -N=;
X¹ and X² each independently represents -H, -OH, -SH, -NH₂, -NHR¹¹, -N(R¹¹)₂, -NHC(O)R¹¹, -OR¹¹, -C(O)OH, -CHO, or C₁₋₁₂ (for example, C₁, C₂, C₃, C₄, C₅, C₆, C₇, C₈, C₉, C₁₀, C₁₁, or C₁₂) halogenated or unhalogenated linear or branched alkyl, wherein at least one of X¹ and X² is selected from the group consisting of -OH, -SH, -NH₂, -NHR¹¹, -C(O)OH and -CHO, wherein R¹¹ represents C₁₋₁₂ (for example, C₁, C₂, C₃, C₄, C₅, C₆, C₇, C₈, C₉, C₁₀, C₁₁, or C₁₂) linear or branched alkyl;
P¹, P² and P³ each independently represents polymerizable group;
Sp¹, Sp², Sp³, Sp⁴, Sp⁵, Sp⁷ and Sp⁸ each independently represents spacer group or single bond;
Sp⁶ each independently represents 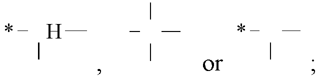
Z¹ and Z² each independently represents -O-, -S-, -CO-, -CO-O-, -O-CO-, -O-CO-O-, -CH₂O-, -OCH₂-, -CH₂S-, -SCH₂-, -CF₂O-, -OCF₂-, -CF₂S-, -SCF₂-, -(CH₂)_{d}-, -CF₂CH₂-, -CH₂CF₂-, -(CF₂)_{d}-, -CH=CH-, -CF=CF-, -CH=CF-, -CF=CH-, -C≡C-, -CH=CH-CO-O-, -O-CO-CH=CH-, -CH₂CH₂-CO-O-, -O-CO-CH₂CH₂-, -CHR¹-, -CR¹R²- or single bond, wherein R¹ and R² each independently represents C₁₋₁₂ linear or branched alkyl, and d represents an integer of 1-4;
nₛ₁ represents 1, 2 or 3, nₛ₂ represents 1, 2, 3 or 4, and nₛ₁+nₛ₂≥3, wherein when nₛ₁ represents 2 or 3, 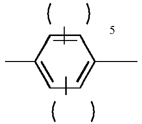 can be same or different, wherein when nₛ₂ represents 2, 3 or 4, 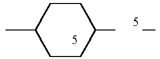 can be same or different; and
pₛ₁, pₛ₂, pₛ₃ and pₛ₄ each independently represents 0, 1 or 2, wherein when pₛ₁ represents 2, Ls₂ can be same or different, wherein when pₛ₂ represents 2, Ls₁ can be same or different; wherein when pₛ₃ represents 2, - s- s can be same or different; wherein when pₛ₄ represents 2, Ls₃ can be same or different.

In some embodiments of the present invention, Ls₂ represents - Sp -,

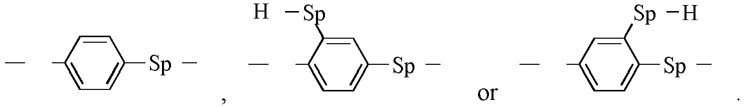

In some embodiments of the present invention, Sp³, Sp⁴ and Sp⁵ each independently represents -(CH₂)p₁-, -(CH₂)p₁-O-, -(CH₂)p₁-O-CO-, -(CH₂)p₁-CO-O-, -(CH₂)p₁-O-CO-O- or -CR⁰R⁰⁰-(CH₂)ₚ₁-, wherein p₁ represents an integer of 1-12 (for example, 1, 2, 3, 4, 5, 6, 7, 8, 9, 10, 11, or 12), R⁰ and R⁰⁰ each independently represents -H, C₁₋₁₂ (for example, C₁, C₂, C₃, C₄, C₅, C₆, C₇, C₈, C₉, C₁₀, C₁₁, or C₁₂) linear or branched alkyl, or C₃₋₁₂ (for example, C₃, C₄, C₅, C₆, C₇, C₈, C₉, C₁₀, C₁₁, or C₁₂) cyclic alkyl; preferably, Sp³, Sp⁴ and Sp⁵ each independently represents -(CH₂)p₁- or -(CH₂)p₁-O-.

In some embodiments of the present invention, the self-aligning agent of general formula SA is selected from a group consisting of the following compounds: 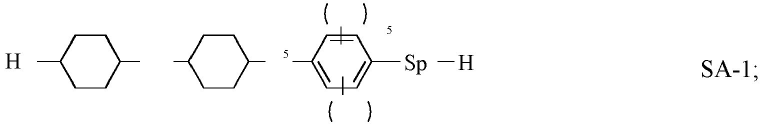 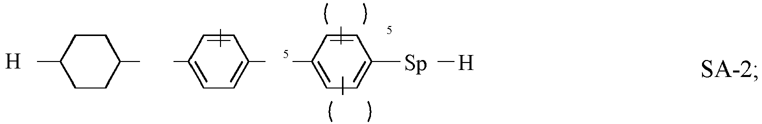 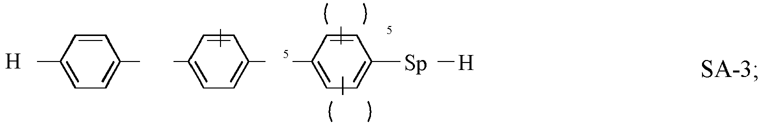 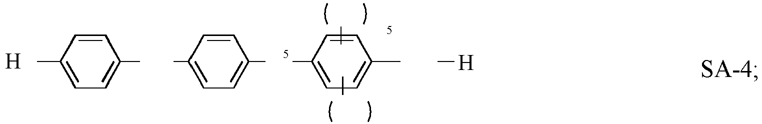 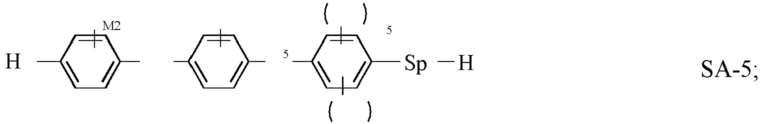 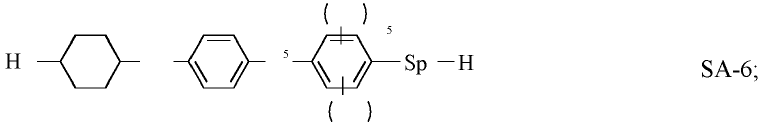 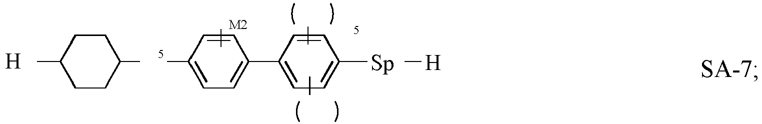 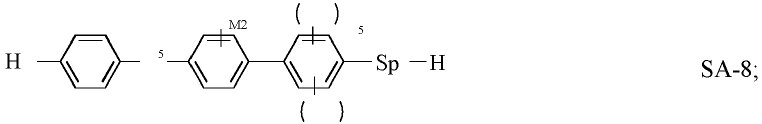 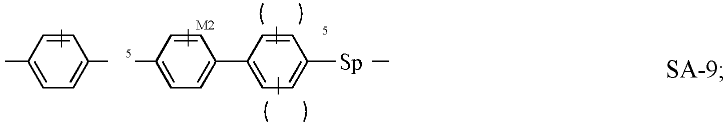 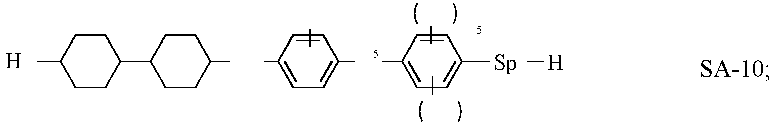 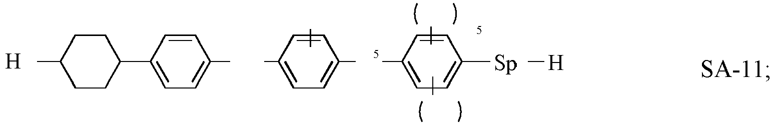 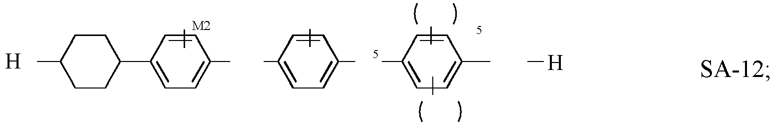 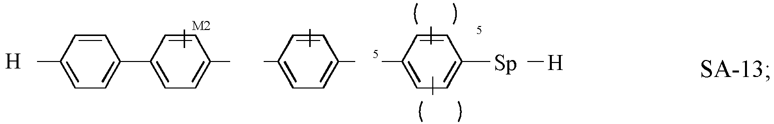 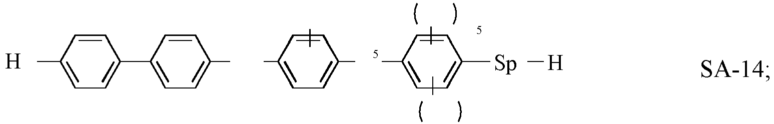 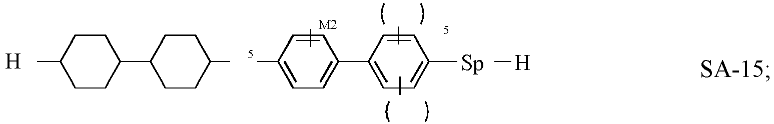 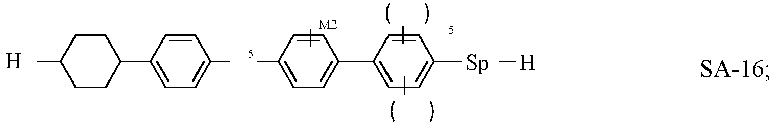 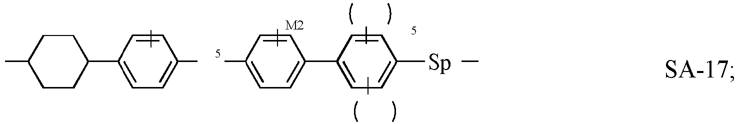 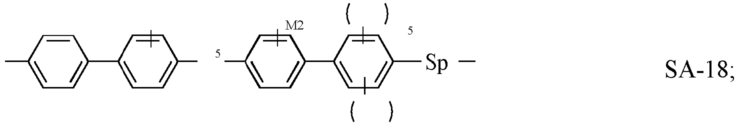 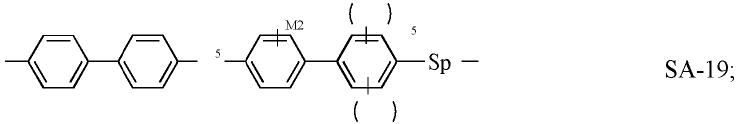 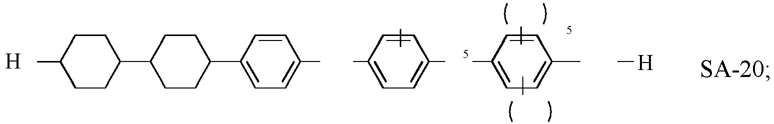 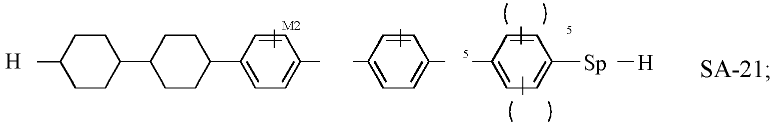 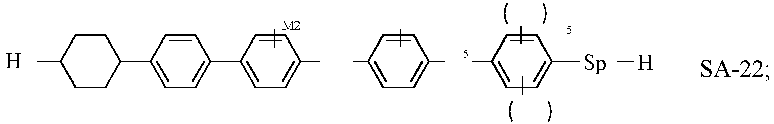 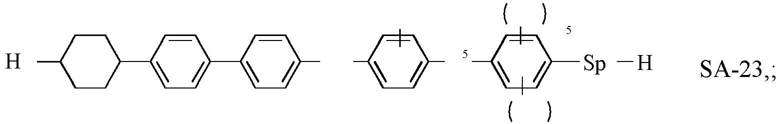 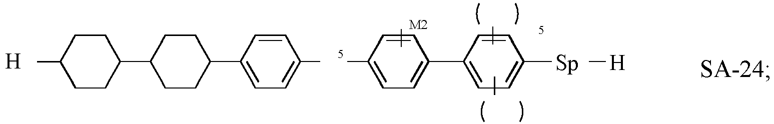 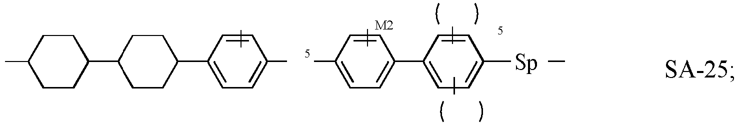 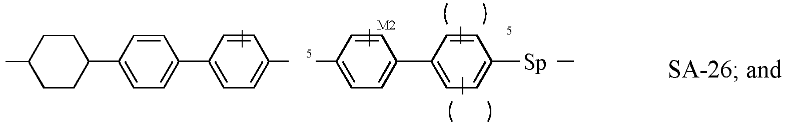 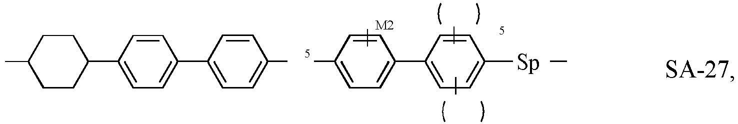 wherein,
Ls₃₁ represents -F, -Cl, -CN, -NO₂, -NCO, -NCS, -OCN, -SCN, -C(O)N(R^{S0})₂, -C(O)R^{S0}, C₁₋₁₂ (for example, it can be C₁, C₂, C₃, C₄, C₅, C₆, C₇, C₈, C₉, C₁₀, C₁₁, or C₁₂) linear or branched alkyl, 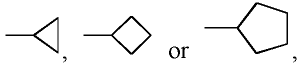 wherein one or more than two nonadjacent -CH₂- in the C₁₋₁₂ linear or branched alkyl can each be independently replaced by -CH=CH-, -C≡C-, -O-, -CO-, -CO-O- or -O-CO-, and one or more -H in the C₁₋₁₂ linear or branched alkyl, 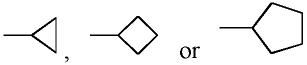 can each be independently substituted by -F, wherein R^{S0} represents C₁₋₁₂ (for example, C₁, C₂, C₃, C₄, C₅, C₆, C₇, C₈, C₉, C₁₀, C₁₁, or C₁₂) linear or branched alkyl;
Ls₂₁ represents - - or 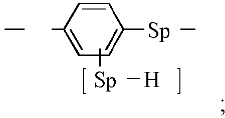 and
Z¹¹ represents -O-, -S-, -CO-, -CO-O-, -O-CO-, -O-CO-O-, -CH₂O-, -OCH₂-, -CH₂S-, -SCH₂-, -CF₂O-, -OCF₂-, -CF₂S-, -SCF₂-, -(CH₂)_{d}-, -CF₂CH₂-, -CH₂CF₂-, -(CF₂)_{d}-, -CH=CH-, -CF=CF-, -CH=CF-, -CF=CH-, -C≡C-, -CH=CH-CO-O-, -O-CO-CH=CH-, -CH₂CH₂-CO-O-, -O-CO-CH₂CH₂-, -CHR¹-, -CR¹R²- or single bond, wherein R¹ and R² each independently represents C₁₋₁₂ linear or branched alkyl, and d represents an integer of 1-4.

In some embodiments of the present invention, preferably, Ls₁, Ls₃ and Ls₃₁ each independently represents -F, -Cl, -CN, -NO₂, -NCO, -NCS, -OCN, -SCN, -C(O)N(R^{S0})₂, -C(O)R^{S0}, C₁₋₁₀ linear or branched alkyl, C₁₋₉ linear or branched alkoxy, or C₂₋₁₀ linear or branched alkenyl; further preferably, Ls₁, Ls₃ and Ls₃₁ each independently represents -F, -Cl, C₁₋₈ linear or branched alkyl, C₁₋₇ linear or branched alkoxy, or C₂₋₈ linear or branched alkenyl.

In some embodiments of the present invention, preferably, R_{S1} represents -Sp¹-P¹, C₁₋₁₀ linear or branched alkyl, C₁₋₉ linear or branched alkoxy, or C₂₋₁₀ linear or branched alkenyl; further preferably, R_{S1} represents C₁₋₈ linear or branched alkyl, C₁₋₇ linear or branched alkoxy, or C₂₋₈ linear or branched alkenyl.

In some embodiments of the present invention, R_{S2} and R_{S3} each independently represents -OH, -SH, -NH₂, -NHR¹¹, -N(R¹¹)₂, -NHC(O)R¹¹, -OR¹¹, -C(O)OH,

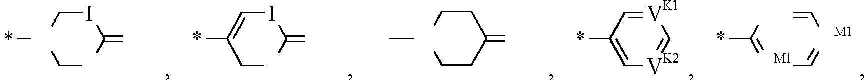

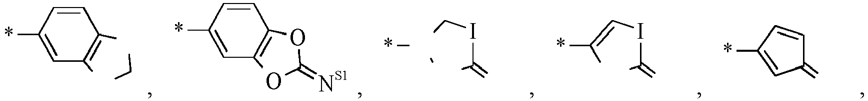

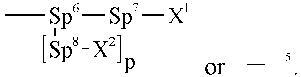

In some embodiments of the present invention, R_{S2} and R_{S3} each independently is selected from the group consisting of the following groups: 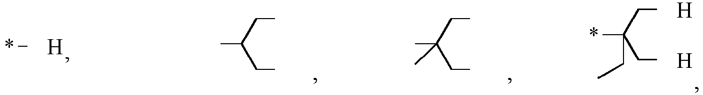 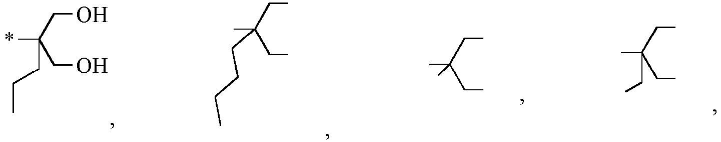 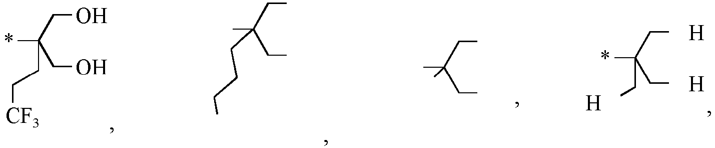 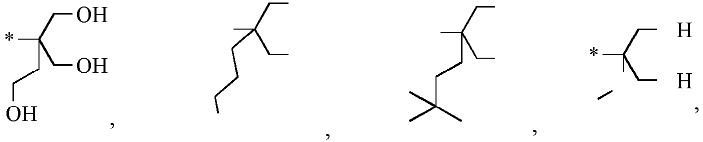 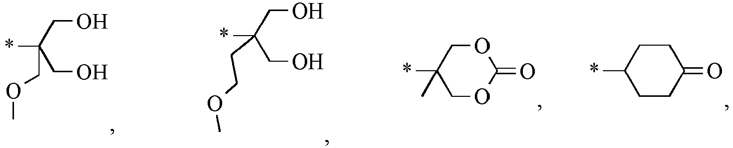 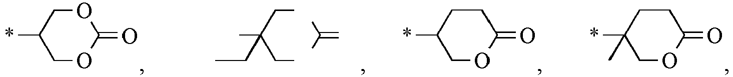 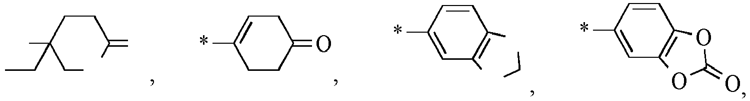 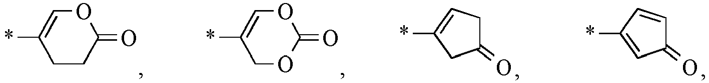 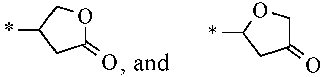 in which, * represents binding site in the bound structure.

In some embodiments of the present invention, R_{S2} and R_{S3} each independently is selected from the group consisting of the following groups:

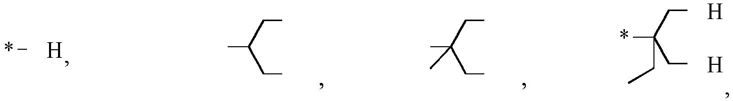

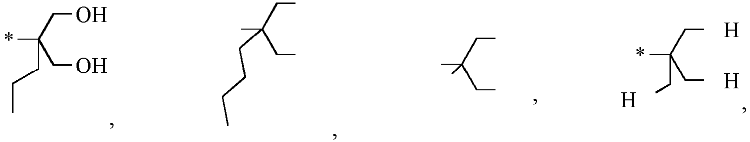

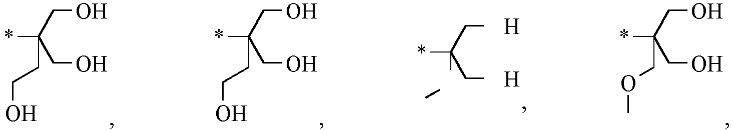

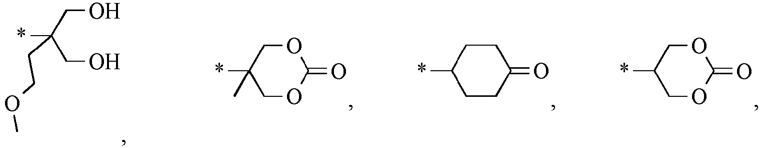

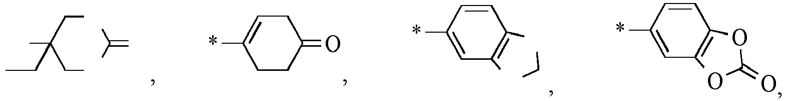

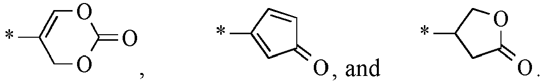

Further, R_{S2} and R_{S3} each independently is preferred to be:

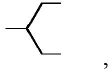

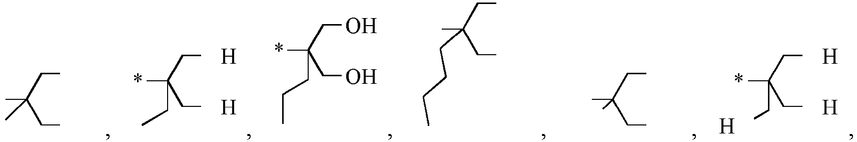

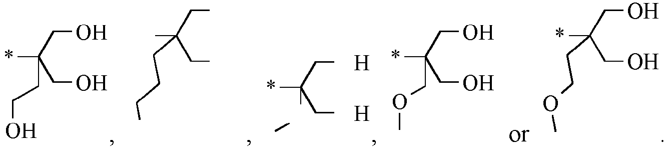

In some embodiments of the present invention, pₛ₁ represents 1 or 2.

In some embodiments of the present invention, the self-aligning agent of general formula SA provides 0.001-5 wt.% (including any of the numerical values or sub-ranges therebetween) of the total weight of the second liquid crystal composition, for example, 0.001 wt.%, 0.005 wt.%, 0.05 wt.%, 0.1 wt.%, 0.2 wt.%, 0.25 wt.%, 0.3 wt.%, 0.35 wt.%, 0.4 wt.%, 0.45 wt.%, 0.5 wt.%, 0.55 wt.%, 0.6 wt.%, 0.65 wt.%, 0.7 wt.%, 0.75 wt.%, 0.8 wt.%, 0.85 wt.%, 0.9 wt.%, 0.95 wt.%, 1.0 wt.%, 2 wt.%, 3 wt.%, 4 wt.%, 5 wt.%, or a range between any two numerical values of these; preferably, the self-aligning agent of general formula SA provides 0.1-2 wt.% of the total weight of the second liquid crystal composition.

In the present invention, when the self-aligning agent of general formula SA is added to the second liquid crystal composition, it enables the second liquid crystal composition of the present invention to orient the liquid crystal molecules without disposing a PI-aligning layer.

In some embodiments of the present invention, the first liquid crystal composition comprises at least one compound of general formula M.

In some embodiments of the present invention, the compound of general formula M provides 0.1-90 wt.% of the total weight of the first liquid crystal composition (including any of the numerical values or sub-ranges therebetween), for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, 52 wt.%, 54 wt.%, 56 wt.%, 58 wt.%, 60 wt.%, 62 wt.%, 64 wt.%, 66 wt.%, 68 wt.%, 70 wt.%, 72 wt.%, 74 wt.%, 76 wt.%, 78 wt.%, 80 wt.%, or a range between any two numerical values of these.

In some embodiments of the present invention, the first liquid crystal composition further comprises at least one compound of general formula A-1 and/or general formula A-2.

In some embodiments of the present invention, at least one compound of general formula A-1 and/or general formula A-2 provides 0.1-60 wt.% of the total weight of the first liquid crystal composition (including any of the numerical values or sub-ranges therebetween), for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, 52 wt.%, 54 wt.%, 56 wt.%, 58 wt.%, 60 wt.%, or a range between any two numerical values of these.

In some embodiments of the present invention, the compound of general formula A-1 provides 0.1-50 wt.% (including any of the numerical values or sub-ranges therebetween) of the total weight of the first liquid crystal composition, for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, or a range between any two numerical values of these.

In some embodiments of the present invention, the compound of general formula A-2 provides 0.1-50 wt.% (including any of the numerical values or sub-ranges therebetween) of the total weight of the first liquid crystal composition, for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, or a range between any two numerical values of these.

In some embodiments of the present invention, the first liquid crystal composition further comprises at least one compound of general formula N.

In some embodiments of the present invention, the compound of general formula N provides 0.1-60 wt.% (including any of the numerical values or sub-ranges therebetween) of the total weight of the first liquid crystal composition, for example, 0.1 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.%, 32 wt.%, 34 wt.%, 35 wt.%, 36 wt.%, 38 wt.%, 40 wt.%, 42 wt.%, 44 wt.%, 46 wt.%, 48 wt.%, 50 wt.%, 52 wt.%, 54 wt.%, 56 wt.%, 58 wt.%, 60 wt.% or a range between any two numerical values of these.

In some embodiments of the present invention, the first liquid crystal composition further comprises at least one compound of general formula F.

In some embodiments of the present invention, the compound of general formula F provides 0.1-30 wt.% (including any of the numerical values or sub-ranges therebetween) of the total weight of the first liquid crystal composition, for example, 0.1 wt.%, 0.5 wt.%, 1 wt.%, 2 wt.%, 4 wt.%, 6 wt.%, 8 wt.%, 10 wt.%, 11 wt.%, 12 wt.%, 13 wt.%, 14 wt.%, 15 wt.%, 16 wt.%, 17 wt.%, 18 wt.%, 20 wt.%, 22 wt.%, 24 wt.%, 25 wt.%, 26 wt.%, 28 wt.%, 30 wt.% or a range between any two numerical values of these.

In some embodiments of the present invention, the first liquid crystal composition further comprises at least one polymerizable compound of general formula RM.

In some embodiments of the present invention, the polymerizable compound of general formula RM provides 0.001-5 wt.% (including any of the numerical values or sub-ranges therebetween) of the total weight of the first liquid crystal composition, for example, 0.001 wt.%, 0.002 wt.%, 0.004 wt.%, 0.005 wt.%, 0.006 wt.%, 0.008 wt.%, 0.01 wt.%, 0.02 wt.%, 0.04 wt.%, 0.06 wt.%, 0.08 wt.%, 0.1 wt.%, 0.2 wt.%, 0.25 wt.%, 0.26 wt.%, 0.27 wt.% , 0.28 wt.%, 0.29 wt.%, 0.3 wt.%, 0.32 wt.%, 0.33 wt.%, 0.34 wt.%, 0.35 wt.%, 0.4 wt.%, 0.5 wt.%, 0.6 wt.%, 0.8 wt.%, 1 wt.%, 1.2 wt.%, 1.6 wt.%, 1.8 wt.%, 2 wt.%, 2.5 wt.%, 3 wt.%, 3.5 wt.%, 4 wt.%, 4.5 wt.%, 5 wt.%, or a range between any two numerical values of these.

In some embodiments of the present invention, the first liquid crystal composition further comprises at least one self-aligning agent of general formula SA.

In some embodiments of the present invention, the self-aligning agent of general formula SA provides 0.001-5 wt.% (including any of the numerical values or sub-ranges therebetween) of the total weight of the first liquid crystal composition, for example, 0.001 wt.%, 0.005 wt.%, 0.05 wt.%, 0.1 wt.%, 0.2 wt.%, 0.25 wt.%, 0.3 wt.%, 0.35 wt.%, 0.4 wt.%, 0.45 wt.%, 0.5 wt.%, 0.55 wt.%, 0.6 wt.%, 0.65 wt.%, 0.7 wt.%, 0.75 wt.%, 0.8 wt.%, 0.85 wt.%, 0.9 wt.%, 0.95 wt.%, 1.0 wt.%, 2 wt.%, 3 wt.%, 4 wt.%, 5 wt.%, or a range between any two numerical values of these.

On the other hand, the present invention provide the use of a single-side peep-proof liquid crystal display device in the field of single-side peep-proofing.

In addition to the above compounds, the second liquid crystal composition of the present invention may also contain common nematic liquid crystal, smectic liquid crystal, cholesteric liquid crystal, antioxidant, ultraviolet absorber, infrared absorber, photoinitiator, polymerizable monomer or light stabilizer and so forth.

Dopants which can be preferably added to the second liquid crystal composition according to the present invention are shown below: 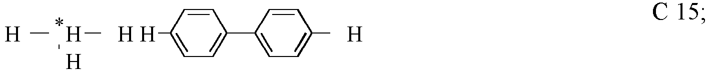 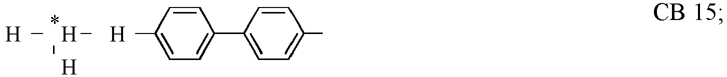 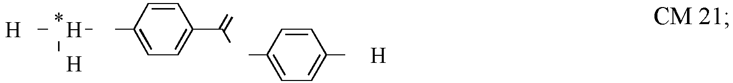 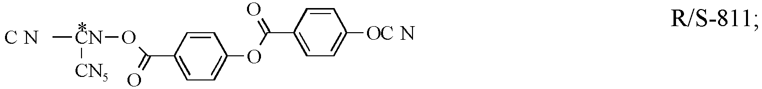 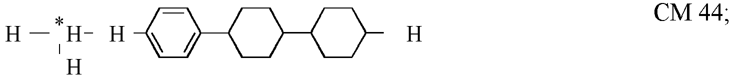 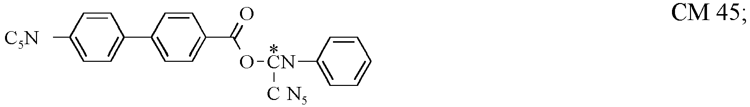 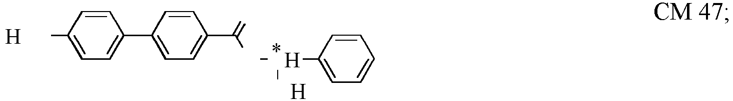 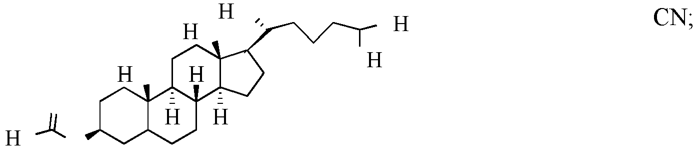 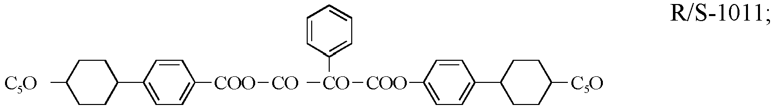 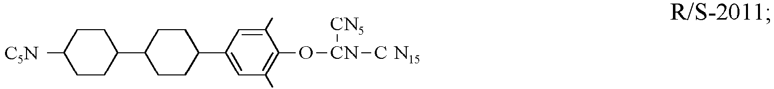 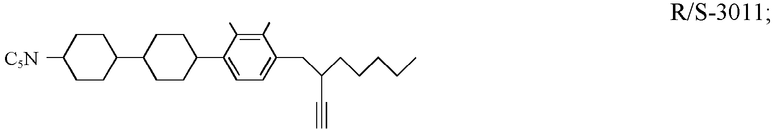 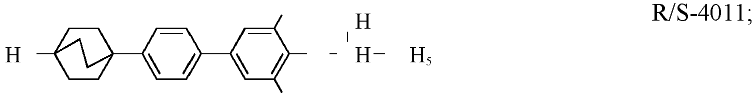 and

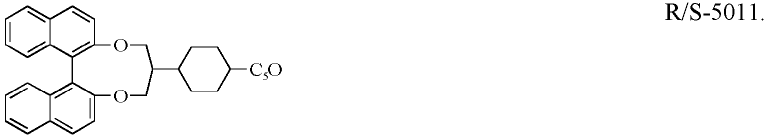

In some embodiments of the present invention, the dopant provides 0-5 wt.% of the total weight of the second liquid crystal composition; preferably, the dopant provides 0.01-1 wt.% of the total weight of the second liquid crystal composition.

Further, additives (such as antioxidant, light stabilizer, and the forth) used in the second liquid crystal composition of the present invention are preferably to be the following substances: 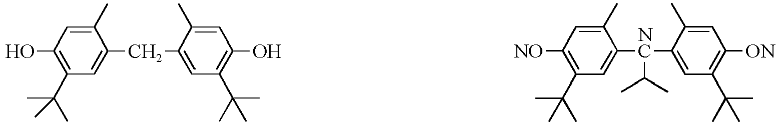 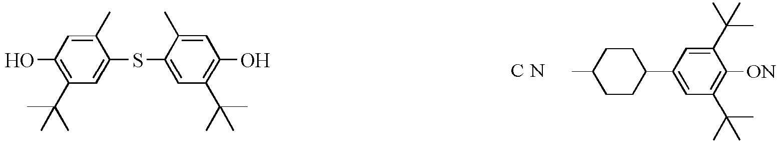 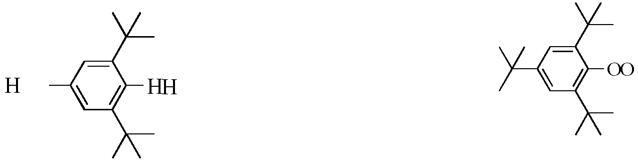 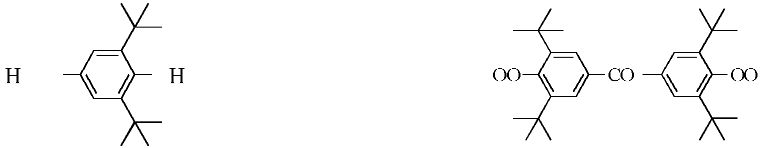 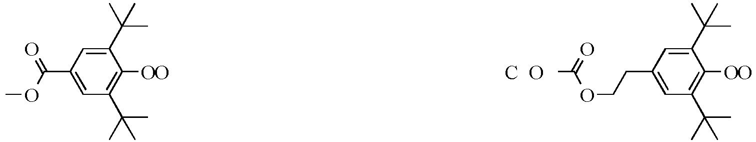 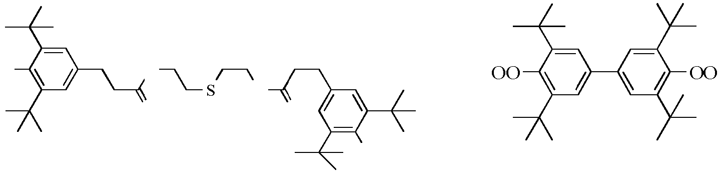 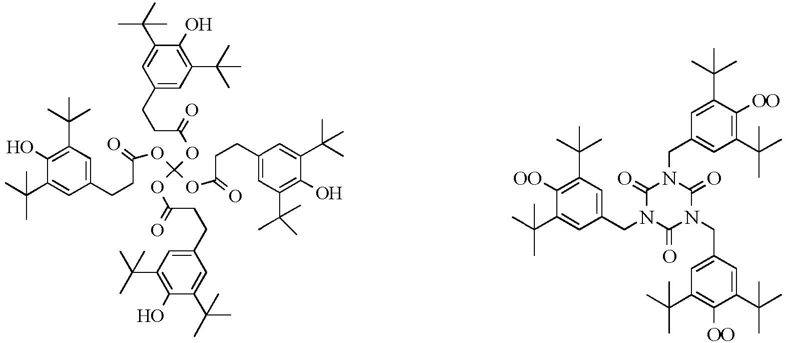 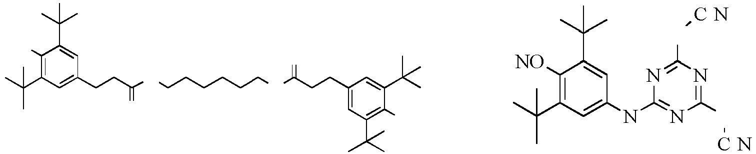 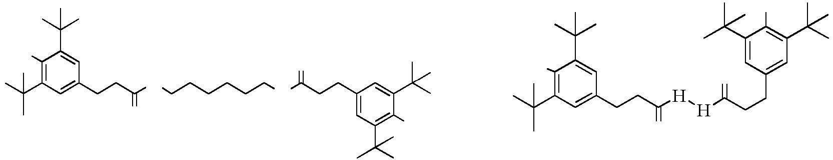 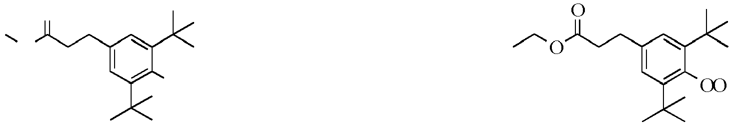 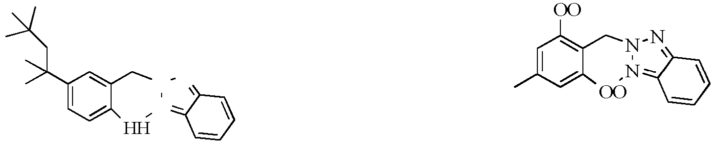 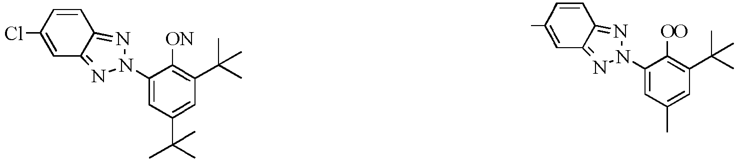 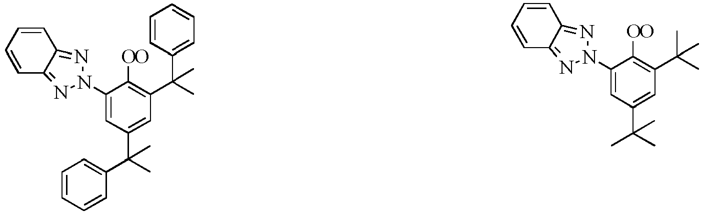 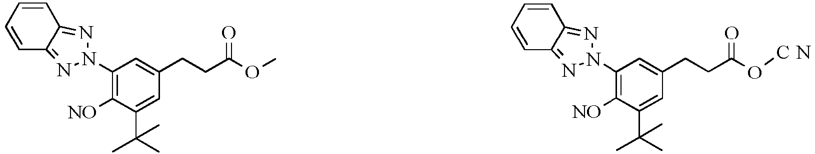 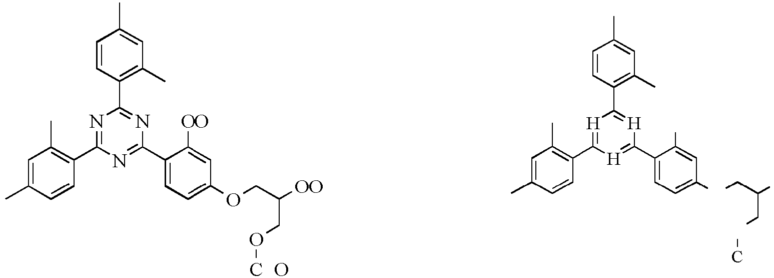 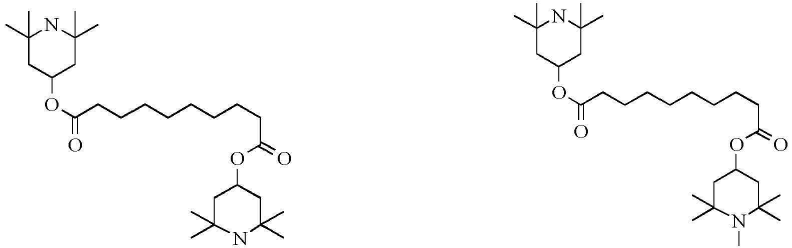 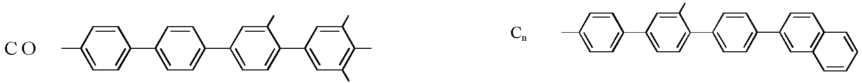 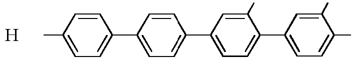 wherein, n represents a positive integer of 1-12.

Preferably, the antioxidant is selected from the light stabilizers as shown below:

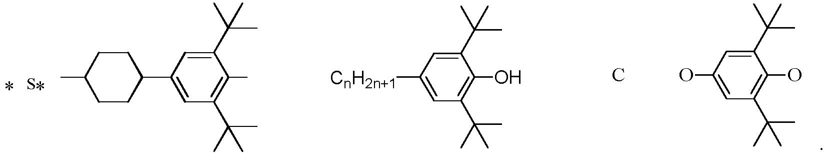

In some embodiments of the present invention, the additives provide 0-5 wt.% of the total weight of the second liquid crystal composition; preferably, the additives provide 0.01-1 wt.% of the total weight of the second liquid crystal composition.

In some embodiments of the present invention, the second liquid crystal composition of the present invention comprises at least one photoinitiator as shown below:

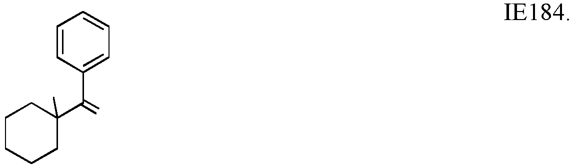

**Beneficial effects:** Compared with the prior art, the single-side peep-proof liquid crystal display device provided by the present invention has a better peep-proofing effect in the single-side viewing angle peep-proofing mode, and has a better wide viewing angle on the opposite side, and in the wide viewing angle mode, it has a better viewing angle display effect.

### Description of the Drawings

Fig. 1 Structural schematic diagram of the single-side peep-proof liquid crystal display device
Fig. 2 Structural schematic diagram of dye liquid crystal panel (IPS mode)
Fig. 3 Single-side peep-proofing schematic diagram at a horizontal viewing angle
Fig. 4 Single-side peep-proofing schematic diagram at a vertical viewing angle
Fig. 5 Structural schematic diagram of dye liquid crystal panel (FFS mode)
wherein, 1 denotes a backlight plate, 2 denotes a lower polarizer, 3 denotes a display panel, 4 denotes an upper polarizer, 5 denotes a dye liquid crystal panel, 5-1 denotes a first substrate, 5-2 denotes a first alignment layer, 5-3 denotes a first electrode, 5-4 denotes a second electrode, 5-5 denotes a second alignment layer, 5-6 denotes a second substrate, 5-7 denotes dye molecules, 5-8 denotes a second liquid crystal composition, 5-9 denotes an insulating layer, a denotes a horizontal plane, b denotes a direction of the incident light, c denotes a component of the incident light in a direction perpendicular to the long axis of the dye liquid crystal molecule, d denotes a dye liquid crystal molecule, e denotes a horizontal viewing angle, and f denotes a vertical viewing angle.

### Detailed Embodiments

The present invention will be illustrated by combining the detailed embodiments below. It should be noted that, the following Examples are instances of the present invention, which are only used to illustrate the present invention, not to limit it. Other combinations and various modifications within the conception of the present invention are possible without departing from the subject matter and scope of the present invention.

For the convenience of the expression, the group structures of each compound in the following Examples are represented by the codes listed in Table 1:

**Table 1. Codes of the group structures of the compounds**

| Unit structure of group | Code | Name of group |
|---|---|---|
| 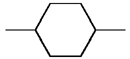 | C | 1,4-cyclohexylidene |
| 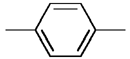 | P | 1,4-phenylene |
| 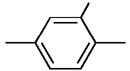 | G | 2-fluoro-1,4-phenylene |
| 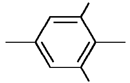 | U | 2,6-difluoro-1,4-phenylene |
| 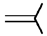 | V(2F) | 1,1-difluoroethenyl |
| -F | F | fluorine substituent |
| -O- | O | oxygen bridge group |
| -CH=CH- or -CH=CH2 | V | ethenylene or ethenyl |
| -CH₂O- | 1O | methyleneoxy |
| 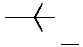 | Q | difluoro ether group |
| -CH₂CH₂- | 2 | ethyl bridge group |
| -CₙH₂ₙ₊₁ or -CₙH₂ₙ- | n (n represents an integer of 1-12) | alkyl or alkylene |

Take the compound with following structural formula as an example: H 5 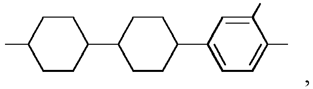 represented by the codes listed in Table 1, this structural formula can be expressed as nCCGF, in which, n in the code represents the number of the carbon atoms of the alkyl on the left, for example, n is "3", meaning that the alkyl is -C₃H₇; C in the code represents 1,4-cyclohexylidene, G represents 2-fluoro-1,4-phenylene, and F represents fluorine.

The abbreviated codes of the test items in the following Examples are as follows:
- Cp: clearing point (nematic-isotropy phases transition temperature,°C)
- Δn: optical anisotropy (589 nm, 25°C)
- nₒ: ordinary ray refraction index
- nₑ: extraordinary ray refraction index
- Δε: dielectric anisotropy (1 KHz, 25°C)
- ε_{⊥}: dielectric constant perpendicular to the molecular axis
- ε_{∥}: dielectric constant parallel to the molecular axis
- T_{c}: phase transformation point in low temperature storage (i.e., the lower limit temperature of the nematic phase, °C)
- K₁₁: splay elastic constant (25°C)
- K₂₂: twist elastic constant (25°C)
- K₃₃: bend elastic constant (25°C)
- γ₁: rotational viscosity (mPa·s, 25°C)
- η: bulk viscosity (mm2·s-1, 25°C)
- τₒₙ: the time required to increase from a 90% transmittance to a 10% transmittance when energized (ms, 25°C)
- VHR(initial): initial voltage holding ratio (25°C, %)
- VHR (Ra): voltage holding ratio after maintained at a high temperature of 150°C for 1 hour (25°C, %)
- VHR(UV): voltage holding ratio after ultraviolet light (UV) irradiation (25°C, %)
wherein,
Cp: tested by melting point apparatus.
Δn: Δn=nₑ-n₀, tested using an Abbe Refractometer under a sodium lamp (589 nm) light source at 25°C.
Δε: Δε=ε_{∥}-ε_{⊥}, in which, ε_{∥} is the dielectric constant parallel to the molecular axis, ε_{⊥} is the dielectric constant perpendicular to the molecular axis, test conditions: 25°C, 1 KHz, VA-type test cell with a cell gap of 6 µm.
T_{c}: placing the nematic phase liquid crystal materials in glass bottles and stored in refrigerators at temperatures of 0°C, -10°C, -20°C, -30°C, and -40°C, respectively, and then the low temperature at 10 days is observed, for example, if the sample is in the nematic phase at -20°C and becomes crystalline or near-crystalline at -30°C, then the T_{c} is <-20°C.
K₁₁, K₂₂ and K₃₃: calculated by C-V curves of liquid crystal tested by LCR meter and anti-parallel friction cell; test conditions: anti-parallel friction cell of 7 µm, V=0.1~20 V.
γ₁: tested using a LCM-2 type liquid crystal physical property evaluation system; test conditions: 20°C, 160-240 V, the cell gap is 20 µm.
η: tested using a Brookfield cone and plate viscometer; test temperature is 25°C.
τₒₙ: tested using a DMS 505 liquid crystal display screen optical measuring system; test conditions: 25°C, TN-type test cell with a cell gap of 7.0 µm.
VHR (initial): initial voltage holding ratio, tested using a TOY06254 liquid crystal physical property evaluation system; the test temperature is 65°C, the test voltage is 5 V, the test frequency is 6 Hz.
VHR (UV): tested using a TOY06254 liquid crystal physical property evaluation system; tested after using UV light with a wavelength of 365 nm and energy of 6000 mJ/cm² to irradiate the liquid crystal, the test temperature is 60°C, the test voltage is 5 V, the test frequency is 6 Hz, TN-type test cell with a cell gap of 9 µm.
VHR (Ra): tested using a TOY06254 liquid crystal physical property evaluation system; the liquid crystal is tested after maintaining at a high temperature of 150°C for 1 h; the test temperature is 60°C, the test voltage is 5 V, the test frequency is 6 Hz, TN-type test cell with a cell gap of 9 µm.

The components used in the following Examples can either be synthesized by methods known in the art or be obtained commercially. The synthetic techniques are conventional, and each of the obtained liquid crystal compounds is tested to meet the standards of electronic compound.

The second liquid crystal compositions are prepared in accordance with the ratio of each of the liquid crystal compounds specified in the following Examples. The preparation of the second liquid crystal compositions is carried out according to the conventional methods in the art, such as mixed and prepared according to the ratios via means of heating, ultrasonic processing, suspending and so forth.

### Example 1

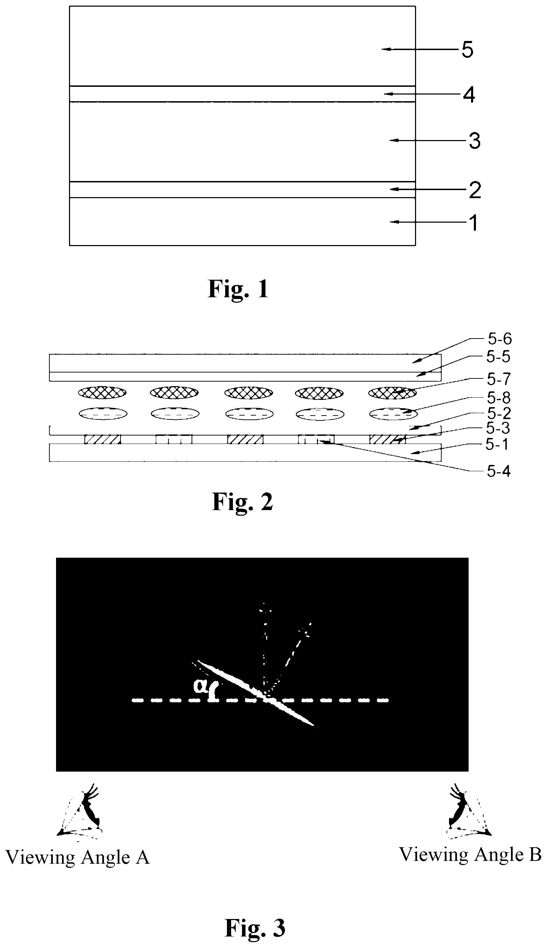

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein the direction of the lower polarizer 2 is 0° and the direction of the upper polarizer 4 is 90°.

A schematic structure of the dye liquid crystal panel provided in this Example is shown in FIG. 2. The dye liquid crystal panel comprises a first substrate 5-1, a first conductive layer (IPS display mode) consisting of a first electrode 5-3 and a second electrode 5-4, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 0°, and the thickness of the dye liquid crystal layer is 4 um.

Wide viewing angle mode (Share): voltage is only applied to the display panel to make it display normally, the long axis of the dye liquid crystal of the dye liquid crystal panel is 0°, the emergent light of the display panel is perpendicular to the direction of the long axis of the dye liquid crystal molecules, and the emergent light of the display panel can transmit normally. At this time, display at all the viewing angles is normal, and it is a share mode.

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the α angle in Fig. 3, so that light perpendicular to the long axis of the dye liquid crystal molecules passes through normally, and light parallel to the long axis of the liquid crystal molecules is absorbed, which is performed to be that the display at viewing angle A gets poor, while display at viewing angle B is normal, that is, realizing the peep-proofing mode at viewing angle A.

### Example 2

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein the direction of the lower polarizer 2 is 0° and the direction of the upper polarizer 4 is 90°.

A schematic structure of the dye liquid crystal panel provided in this Example is shown in FIG. 2. The dye liquid crystal panel comprises a first substrate 5-1, a first conductive layer (IPS display mode) consisting of a first electrode 5-3 and a second electrode 5-4, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 0°, and the thickness of the dye liquid crystal layer is 6 um.

Wide viewing angle mode (Share): voltage is only applied to the display panel to make it display normally, the long axis of the dye liquid crystal of the dye liquid crystal panel is 0°, the emergent light of the display panel is perpendicular to the direction of the long axis of the dye liquid crystal molecules, and the emergent light of the display panel can transmit normally. At this time, display at all the viewing angles is normal, and it is a share mode.

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the α angle in Fig. 3, so that light perpendicular to the long axis of the dye liquid crystal molecules passes through normally, and light parallel to the long axis of the liquid crystal molecules is absorbed, which is performed to be that the display at viewing angle A gets poor, while display at viewing angle B is normal, that is, realizing the peep-proofing mode at viewing angle A.

### Example 3

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein the direction of the lower polarizer 2 is 0° and the direction of the upper polarizer 4 is 90°.

A schematic structure of the dye liquid crystal panel provided in this Example is shown in FIG. 2. The dye liquid crystal panel comprises a first substrate 5-1, a first conductive layer (IPS display mode) consisting of a first electrode 5-3 and a second electrode 5-4, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 0°, and the thickness of the dye liquid crystal layer is 8 um.

Wide viewing angle mode (Share): voltage is only applied to the display panel to make it display normally, the long axis of the dye liquid crystal of the dye liquid crystal panel is 0°, the emergent light of the display panel is perpendicular to the direction of the long axis of the dye liquid crystal molecules, and the emergent light of the display panel can transmit normally. At this time, display at all the viewing angles is normal, and it is a share mode.

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the α angle in Fig. 3, so that light perpendicular to the long axis of the dye liquid crystal molecules passes through normally, and light parallel to the long axis of the liquid crystal molecules is absorbed, which is performed to be that the display at viewing angle A gets poor, while display at viewing angle B is normal, that is, realizing the peep-proofing mode at viewing angle A.

### Example 4

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein wherein the direction of the lower polarizer 2 is 0° and the direction of the upper polarizer 4 is 90°.

A schematic structure of the dye liquid crystal panel provided in this Example is shown in FIG. 2. The dye liquid crystal panel comprises a first substrate 5-1, a first conductive layer (IPS display mode) consisting of a first electrode 5-3 and a second electrode 5-4, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 0°, and the thickness of the dye liquid crystal layer is 10 um.

Wide viewing angle mode (Share): voltage is only applied to the display panel to make it display normally, the long axis of the dye liquid crystal of the dye liquid crystal panel is 0°, the emergent light of the display panel is perpendicular to the direction of the long axis of the dye liquid crystal molecules, and the emergent light of the display panel can transmit normally. At this time, display at all the viewing angles is normal, and it is a share mode.

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the α angle in Fig. 3, so that light perpendicular to the long axis of the dye liquid crystal molecules passes through normally, and light parallel to the long axis of the liquid crystal molecules is absorbed, which is performed to be that the display at viewing angle A gets poor, while display at viewing angle B is normal, that is, realizing the peep-proofing mode at viewing angle A.

### Example 5

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein the direction of the lower polarizer 2 is 90° and the direction of the upper polarizer 4 is 0°.

A schematic structure of the dye liquid crystal panel provided in this Example is shown in FIG. 2. The dye liquid crystal panel comprises a first substrate 5-1, a first conductive layer (IPS display mode) consisting of a first electrode 5-3 and a second electrode 5-4, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 90°, and the thickness of the dye liquid crystal layer is 4 um.

Wide viewing angle mode (Share): voltage is only applied to the display panel to make it display normally, the long axis of the dye liquid crystal of the dye liquid crystal panel is at 90°, the emergent light of the display panel is perpendicular to the direction of the long axis of the dye liquid crystal molecules, and the emergent light of the display panel can transmit normally. At this time, display at all the viewing angles is normal, and it is a share mode.

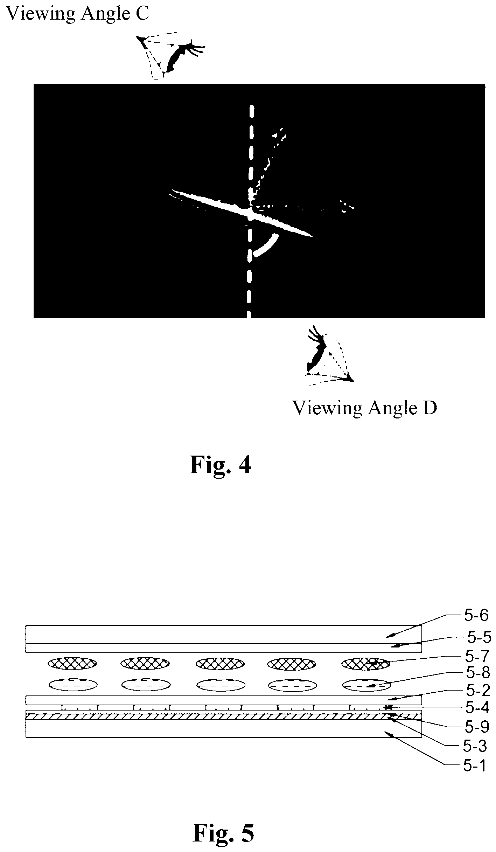

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the β angle in Fig. 4, so that light perpendicular to the long axis of the dye liquid crystal molecules passes through normally, and light parallel to the long axis of the liquid crystal molecules is absorbed, which is performed to be that the display at viewing angle D gets poor, while display at viewing angle C is normal, that is, realizing the peep-proofing mode at viewing angle D.

### Example 6

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein wherein the direction of the lower polarizer 2 is 0° and the direction of the upper polarizer 4 is 90°.

A schematic structure of the dye liquid crystal panel provided in this Example is shown in FIG. 5. The dye liquid crystal panel comprises a first substrate 5-1, a first conductive layer (FFS display mode) consisting of a first electrode 5-3, a second electrode 5-4 and an insulating layer 5-9, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 0°, and the thickness of the dye liquid crystal layer is 4 um.

Wide viewing angle mode (Share): voltage is only applied to the display panel to make it display normally, the long axis of the dye liquid crystal of the dye liquid crystal panel is 0°, the emergent light of the display panel is perpendicular to the direction of the long axis of the dye liquid crystal molecules, and the emergent light of the display panel can transmit normally. At this time, display at all the viewing angles is normal, and it is a share mode.

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the α angle in Fig. 3, so that light perpendicular to the long axis of the dye liquid crystal molecules passes through normally, and light parallel to the long axis of the liquid crystal molecules is absorbed, which is performed to be that the display at viewing angle A gets poor, while display at viewing angle B is normal, that is, realizing the peep-proofing mode at viewing angle A.

### Example 7

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein the direction of the lower polarizer 2 is 90° and the direction of the upper polarizer 4 is 0°.

A schematic structure of the dye liquid crystal panel provided in this Example is shown in FIG. 5. The dye liquid crystal panel comprises a first substrate 5-1, a first conductive layer (FFS display mode) consisting of a first electrode 5-3, a second electrode 5-4 and an insulating layer 5-9, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 90°, and the thickness of the dye liquid crystal layer is 6 um.

Wide viewing angle mode (Share): voltage is only applied to the display panel to make it display normally, the long axis of the dye liquid crystal of the dye liquid crystal panel is 90°, the emergent light of the display panel is perpendicular to the direction of the long axis of the dye liquid crystal molecules, and the emergent light of the display panel can transmit normally. At this time, display at all the viewing angles is normal, and it is a share mode.

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the β angle in Fig. 4, so that light perpendicular to the long axis of the dye liquid crystal molecules passes through normally, and light parallel to the long axis of the liquid crystal molecules is absorbed, which is performed to be that the display at viewing angle D gets poor, while display at viewing angle C is normal, that is, realizing the peep-proofing mode at viewing angle D.

### Example 8

A structural schematic diagram of the single-side peep-proof liquid crystal display device provided in this Example is shown in FIG. 1, the display device comprises a backlight plate 1, a lower polarizer 2, a display panel 3, an upper polarizer 4, and a dye liquid crystal panel 5, wherein the direction of the lower polarizer 2 is 90° and the direction of the upper polarizer 4 is 0°.

A schematic structure of the dye liquid crystal panel provided in this Example is shown in FIG. 5. The dye liquid crystal panel comprises a first substrate 5-1, a first conductive layer (FFS display mode) consisting of a first electrode 5-3, a second electrode 5-4 and an insulating layer 5-9, a first alignment layer 5-2, a dye liquid crystal layer consisting of dye molecules 5-7 and a second liquid crystal composition 5-8, a second alignment layer 5-5, and a second substrate 5-6, wherein the first alignment layer and the second alignment layer are anti-parallel friction layers, the friction direction is 90°, and the thickness of the dye liquid crystal layer is 4 um.

Wide viewing angle mode (Share): voltage is only applied to the display panel to make it display normally, the long axis of the dye liquid crystal of the dye liquid crystal panel is 90°, the emergent light of the display panel is perpendicular to the direction of the long axis of the dye liquid crystal molecules, and the emergent light of the display panel can transmit normally. At this time, display at all the viewing angles is normal, and it is a share mode.

Single-side viewing angle peep-proofing mode (Privacy): voltage is applied to the display panel and the dye liquid crystal panel at the same time, the dye liquid crystal of the dye liquid crystal panel rotates horizontally under the drive of the voltage, and the emergent light of the display panel forms a vector angle with the long axis of the dye liquid crystal molecules, for example, the β angle in Fig. 4, so that light perpendicular to the long axis of the dye liquid crystal molecules passes through normally, and light parallel to the long axis of the liquid crystal molecules is absorbed, which is performed to be that the display at viewing angle D gets poor, while display at viewing angle C is normal, that is, realizing the peep-proofing mode at viewing angle D.

As shown below, taking the single-side peep-proof liquid crystal display device constructed in Example 1 as an example, the display effect of the single-side peep-proof liquid crystal display device of the present application in the wide viewing angle mode as well as the single-side viewing angle peep-proofing mode is explained via filling the dye liquid crystal panel with different liquid crystal compositions, and testing the display performance and luminance values at different viewing angles. It should be explained that the single-side peep-proof liquid crystal display devices that are listed in Example 2 to Example 8 and those fall within the scope of the present application are capable of having equivalent display effects.

### Application Example 1

A second liquid crystal composition 1 is prepared according to each compound and weight percentage listed in Table 2 and a dye accounting for 4% of the weight percentage of the second liquid crystal composition is added into the second liquid crystal composition 1, and the performance test is carried out by filling the same into the dye liquid crystal panel of Example 1 of the present application.

**Table 2. Formulation and test results for the performance parameters of the second liquid crystal composition**

| Code of component | Weight percentage | Code of general formula | Test results for the performance parameters | |
|---|---|---|---|---|
| 3PPGGF | 0.5 | A-2-17 | Cp | 91 |
| 3CPPC3 | 2.5 | M-26 | Δn | 0.099 |
| 3CCGF | 5 | A-2-4 | nₑ | 1.578 |
| 4CCGF | 5 | A-2-4 | n₀ | 1.479 |
| 2CCPOCF3 | 6 | A-2-4 | Δε | 6 |
| 3CCPOCF3 | 5 | A-2-4 | ε_{∥} | 8.9 |
| 3CCV | 46 | M-1 | ε_{⊥} | 2.9 |
| 3CCV1 | 6 | M-1 | K₁₁ | 13 |
| 2PGPC3 | 2 | M-29 | K₂₂ | 7.8 |
| 3PGPC2 | 2 | M-29 | K₃₃ | 15.9 |
| 3PGPF | 2 | A-2-12 | γ1 | 73 |
| 3PGUQUF | 5 | A-1-15 | η | 9 |
| 4PGUQUF | 4 | A-1-15 | T_{c} | -40 |
| 5PGUQUF | 5 | A-1-15 | τₒₙ | 12 |
| 2PGUQPOCF3 | 2 | A-1-15 | VHR (Initial) | 97.00 |
| 3PGUQPOCF3 | 2 | A-1-15 | VHR (UV) | 92.60 |
| Total | 100 | | VHR (Ra) | 96.90 |

Its luminance values at different viewing angles in the wide viewing angle mode as well as the single-side viewing angle peep-proofing mode are simulated using the LCD master, as shown in Table 3 and Table 4.

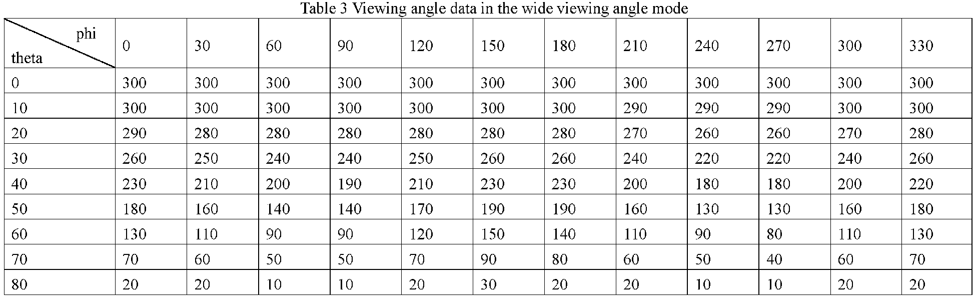

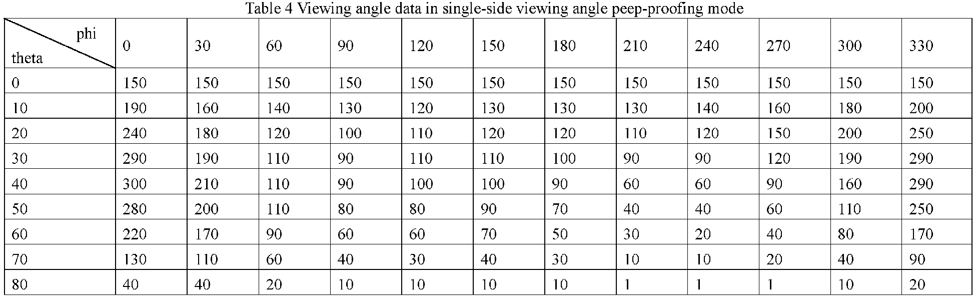

Its luminance values of viewing angles at horizontal angles are shown below in Table 5.

**Table 5 Luminance values at horizontal viewing angles**

| | -80 | -70 | -60 | -50 | -40 | -30 | -20 | -10 | 0 | 10 | 20 | 30 | 40 | 50 | 60 | 70 | 80 |
|---|---|---|---|---|---|---|---|---|---|---|---|---|---|---|---|---|---|
| Share | 20 | 80 | 140 | 190 | 230 | 260 | 280 | 300 | 300 | 300 | 290 | 260 | 230 | 180 | 130 | 70 | 20 |
| Privacy | 10 | 30 | 50 | 70 | 90 | 100 | 120 | 130 | 150 | 190 | 240 | 290 | 300 | 280 | 220 | 130 | 40 |
| Privacy/Share(%) | 50 | 38 | 36 | 37 | 39 | 38 | 43 | 43 | 50 | 63 | 83 | 112 | 130 | 156 | 169 | 186 | 200 |

Wherein, phi denotes the angle in the azimuth plane (horizontal plane), and theta denotes the angle in the pitching plane (vertical plane); in the horizontal viewing angle, the luminance value where theta=-10°~-80° corresponds to the luminance value where phi=180°, and in the horizontal viewing angle, the luminance value where theta=10°~80° corresponds to the luminance value where phi=0°.

Based on the simulated test conditions of this Example, when the ratio of Privacy/Share is ≤45%, its viewing angle display gets poor and the technical effect of peep-proofing is realized, and furthermore, when the ratio of Privacy/Share is ≤ 40%, better peep-proofing effect is thereby realized.

As can be seen from the data in Table 3, Table 4, and Table 5, when the second liquid crystal composition filled in the display device of the present application has a higher clear point, a larger optical anisotropy (Δn, nₑ, n₀), a larger dielectric anisotropy (Δε, ε_{∥}, ε_{⊥}), a larger elastic constant (K₁₁, K₂₂, K₃₃), a smaller rotational viscosity, a smaller bulk viscosity, a better phase transformation point in low temperature storage, and better voltage holding stability (VHR (Initial), VHR (UV), VHR (Ra)), the present application can meet the wide viewing angle display requirements in the angle range of theta=-80°~80° in the wide viewing angle mode. In the single-side viewing angle peep-proofing mode, the present application can realize narrow viewing angle display in the angle range of theta=-50°~-30° with Privacy/Share ratio ≤ 45%, while in other viewing angles display is normal, that is, a single-side peep-proofing in the angle range of theta=-50°~-30° is realized.

### Application Example 2

A second liquid crystal composition 2 is prepared according to each compound and weight percentage listed in Table 6 and a dye accounting for 2% of the weight percentage of the second liquid crystal composition is added into the second liquid crystal composition 2, and the performance test is carried out by filling the same into the dye liquid crystal panel of Example 1 of the present application.

**Table 6. Formulation and test results for the performance parameters of the second liquid crystal composition**

| Code of component | Weight percentage | Code of general formula | Test results for the performance parameters | |
|---|---|---|---|---|
| 3CPP2 | 5 | M-16 | Cp | 98 |
| 5PP1 | 2.5 | M-6 | Δn | 0.109 |
| VCCP1 | 10 | M-12 | nₑ | 1.596 |
| 3CCV | 20 | M-1 | n₀ | 1.487 |
| 4CCV | 4.5 | M-1 | Δ_{ε} | 5.7 |
| V2CCP1 | 10 | M-12 | ε_{∥} | 8.5 |
| 3CCV1 | 12 | M-1 | ε_{⊥} | 2.8 |
| 5CCV1 | 9.5 | M-1 | K₁₁ | 15.7 |
| 2PGP2V(2F) | 2 | A-2-12 | K₂₂ | 9.4 |
| 3PGP2V(2F) | 2 | A-2-12 | K₃₃ | 20.4 |
| 3D2PUF | 3 | A-2-6 | γ₁ | 75 |
| 4D2PUF | 1.5 | A-2-6 | η | 11 |
| 3CD2PUF | 3 | A-2-18 | T_{c} | -30 |
| 3PGUQUF | 5 | A-1-15 | τₒₙ | 12 |
| 4PGUQUF | 5 | A-1-15 | VHR (Initial) | 97.30 |
| 5PGUQUF | 5 | A-1-15 | VHR (UV) | 93.00 |
| Total | 100 | | VHR (Ra) | 96.50 |

Its luminance values of viewing angles at horizontal angles in the wide viewing angle mode as well as the single-side viewing angle peep-proofing mode are simulated using the LCD master, as shown in Table 7, to measure its relative value relative to theta=0° in the wide viewing angle mode (for example, the calculation method of the relative value of theta=80° relative to theta=0° is: (the luminance value of theta=80°)/(the luminance value of theta=0°)), and its relative value relative to theta=40° in the single-side viewing angle peep-proofing mode (for example, the calculation method of the relative value of theta=80° relative to theta=40° is: (the luminance value of theta=80°)/(the luminance value of theta=40°)), and the result is as shown in Table 8. The ratio of the luminance value of the horizontal viewing angle peep-proofing mode to the luminance value of the share mode (Privacy/Share) is as shown in Table 12.

### Application Example 3

A second liquid crystal composition 3 is prepared according to each compound and weight percentage listed in Table 9 and a dye accounting for 3.5% of the weight percentage of the second liquid crystal composition is added into the second liquid crystal composition 3, and the performance test is carried out by filling the same into the dye liquid crystal panel of Example 1 of the present application.

**Table 9. Formulation and test results for the performance parameters of the second liquid crystal composition**

| Code of component | Weight percentage | Code of general formula | Test results for the performance parameters | |
|---|---|---|---|---|
| 3CPPC3 | 5 | M-26 | Cp | 100 |
| 2CCPOCF3 | 5.5 | A-2-4 | Δn | 0.106 |
| 3CCPOCF3 | 7 | A-2-4 | nₑ | 1.588 |
| 3CCV | 46 | M-1 | n₀ | 1.482 |
| 3CCV1 | 10 | M-1 | Δε | 5.1 |
| 2PGPC3 | 4.5 | M-29 | ε_{∥} | 7.8 |
| 3PGPC2 | 4.5 | M-29 | ε_{⊥} | 2.7 |
| 3PGPF | 1.5 | A-2-12 | K₁₁ | 14.8 |
| 3PGUQUF | 6 | A-1-15 | K₂₂ | 8.9 |
| 4PGUQUF | 5 | A-1-15 | K₃₃ | 16.5 |
| 5PGUQUF | 5 | A-1-15 | γ₁ | 68 |
| | | | η | 9 |
| | | | T_{c} | -30 |
| | | | τₒₙ | 11 |
| | | | VHR (Initial) | 97.20 |
| | | | VHR (UV) | 92.80 |
| Total | 100 | | VHR (Ra) | 96.30 |

Its luminance values of viewing angles at horizontal angles in the wide viewing angle mode as well as the single-side viewing angle peep-proofing mode are simulated using the LCD master, as shown in Table 7, to measure its relative value relative to theta=0° in the wide viewing angle mode (for example, the calculation method of the relative value of theta=80° relative to theta=0° is: (the luminance value of theta=80°)/(the luminance value of theta=0°)), and its relative value relative to theta=40° in the single-side viewing angle peep-proofing mode (for example, the calculation method of the relative value of theta=80° relative to theta=40° is: (the luminance value of theta=80°)/(the luminance value of theta=40°)), and the result is as shown in Table 8. The ratio of the luminance value of the horizontal viewing angle peep-proofing mode to the luminance value of the share mode (Privacy/Share) is as shown in Table 12.

### Application Example 4

A second liquid crystal composition 4 is prepared according to each compound and weight percentage listed in Table 10 and a dye accounting for 2% of the weight percentage of the second liquid crystal composition is added into the second liquid crystal composition 4, and the performance test is carried out by filling the same into the dye liquid crystal panel of Example 1 of the present application.

**Table 10. Formulation and test results for the performance parameters of the second liquid crystal composition**

| Code of component | Weight percentage | Code of general formula | Test results for the performance parameters | |
|---|---|---|---|---|
| 3CPO1 | 5.5 | M-2 | Cp | 96 |
| 3CPUF | 18 | A-2-9 | Δn | 0.109 |
| 4CCPUF | 2.5 | A-2-13 | nₑ | 1.601 |
| VCCP1 | 10 | M-12 | n₀ | 1.492 |
| 3CCV | 20 | M-1 | Δε | 5.6 |
| V2CCP1 | 10 | M-12 | ε_{∥} | 8.5 |
| 3CCV1 | 8.5 | M-1 | ε_{⊥} | 2.9 |
| 3D2PUF | 4 | A-2-6 | K₁₁ | 15.7 |
| 4D2PUF | 4 | A-2-6 | K₂₂ | 9.4 |
| 3CDPUF | 3.5 | A-2-15 | K₃₃ | 18.9 |
| 3CD2PUF | 4 | A-2-18 | γ₁ | 85 |
| 1PP2V | 4 | M-6 | η | 12 |
| 3CPP2V | 3 | M-16 | T_{c} | -30 |
| 3CPP2V1 | 3 | M-16 | τₒₙ | 15 |
| | | | VHR (Initial) | 97.9 |
| | | | VHR (UV) | 97.6 |
| Total | 100 | | VHR (Ra) | 97.9 |

Its luminance values of viewing angles at horizontal angles in the wide viewing angle mode as well as the single-side viewing angle peep-proofing mode are simulated using the LCD master, as shown in Table 7, to measure its relative value relative to theta=0° in the wide viewing angle mode (for example, the calculation method of the relative value of theta=80° relative to theta=0° is: (the luminance value of theta=80°)/(the luminance value of theta=0°)), and its relative value relative to theta=40° in the single-side viewing angle peep-proofing mode (for example, the calculation method of the relative value of theta=80° relative to theta=40° is: (the luminance value of theta=80°)/(the luminance value of theta=40°)), and the result is as shown in Table 8. The ratio of the luminance value of the horizontal viewing angle peep-proofing mode to the luminance value of the share mode (Privacy/Share) is as shown in Table 12.

### Application Example 5

A second liquid crystal composition 5 is prepared according to each compound and weight percentage listed in Table 11 and a dye accounting for 3% of the weight percentage of the second liquid crystal composition is added into the second liquid crystal composition 5, and the performance test is carried out by filling the same into the dye liquid crystal panel of Example 1 of the present application.

**Table 11. Formulation and test results for the performance parameters of the second liquid crystal composition**

| Code of component | Weight percentage | Code of general formula | Test results for the performance parameters | |
|---|---|---|---|---|
| 3CPP1 | 4.5 | M-16 | Cp | 81 |
| 3CCQUF | 5 | A-1-1 | Δn | 0.096 |
| 2PGP3 | 2.5 | M-19 | nₑ | 1.576 |
| VCCP1 | 9 | M-12 | n₀ | 1.48 |
| 3CCV | 41 | M-1 | Δε | 6 |
| V2CCP1 | 9 | M-12 | ε_{∥} | 9 |
| 3CCV1 | 5 | M-1 | ε_{⊥} | 3 |
| 3PUQUF | 11 | A-1-7 | K₁₁ | 11.4 |
| 3PGUQUF | 5 | A-1-15 | K₂₂ | 6.8 |
| 4PGUQUF | 4 | A-1-15 | K₃₃ | 15.8 |
| 5PGUQUF | 4 | A-1-15 | γ₁ | 50 |
| | | | η | 11 |
| | | | T_{c} | -40 |
| | | | τₒₙ | 9 |
| | | | VHR (Initial) | 97.4 |
| | | | VHR (UV) | 90 |
| Total | 100 | | VHR (Ra) | 94.8 |

Its luminance values of viewing angles at horizontal angles in the wide viewing angle mode as well as the single-side viewing angle peep-proofing mode are simulated using the LCD master, as shown in Table 7, to measure its relative value relative to theta=0° in the wide viewing angle mode (for example, the calculation method of the relative value of theta=80° relative to theta=0° is: (the luminance value of theta=80°)/(the luminance value of theta=0°)), and its relative value relative to theta=40° in the single-side viewing angle peep-proofing mode (for example, the calculation method of the relative value of theta=80° relative to theta=40° is: (the luminance value of theta=80°)/(the luminance value of theta=40°)), and the result is as shown in Table 8. The ratio of the luminance value of the horizontal viewing angle peep-proofing mode to the luminance value of the share mode (Privacy/Share) is as shown in Table 12.

**Table 7 Luminance value at the horizontal viewing angle absolute value**

| | | -80 | -70 | -60 | -50 | -40 | -30 | -20 | -10 | 0 | 10 | 20 | 30 | 40 | 50 | 60 | 70 | 80 |
|---|---|---|---|---|---|---|---|---|---|---|---|---|---|---|---|---|---|---|
| Share | Application Example 2 | 21 | 85 | 150 | 205 | 251 | 286 | 314 | 339 | 345 | 339 | 325 | 286 | 251 | 194 | 139 | 74 | 21 |
| | Application Example 3 | 19 | 78 | 140 | 192 | 235 | 265 | 288 | 312 | 315 | 312 | 299 | 265 | 235 | 182 | 130 | 69 | 19 |
| | Application Example 4 | 19 | 78 | 140 | 194 | 239 | 278 | 305 | 333 | 339 | 333 | 316 | 278 | 239 | 184 | 130 | 69 | 19 |
| | Application Example 5 | 19 | 78 | 139 | 190 | 232 | 265 | 288 | 309 | 312 | 309 | 299 | 265 | 232 | 180 | 129 | 68 | 19 |
| Privacy | Application Example 2 | 10 | 31 | 52 | 74 | 96 | 108 | 132 | 144 | 173 | 211 | 264 | 313 | 321 | 294 | 227 | 133 | 40 |
| | Application Example 3 | 10 | 29 | 49 | 69 | 90 | 102 | 124 | 135 | 158 | 198 | 247 | 296 | 300 | 277 | 216 | 126 | 38 |
| | Application Example 4 | 13 | 38 | 63 | 84 | 108 | 120 | 138 | 150 | 173 | 209 | 259 | 305 | 315 | 302 | 242 | 150 | 48 |
| | Application Example 5 | 13 | 38 | 60 | 84 | 104 | 117 | 137 | 147 | 165 | 200 | 252 | 290 | 297 | 274 | 218 | 127 | 39 |

**Table 8 Luminance value at the horizontal viewing angle relative value)**

| | | -80 | -70 | -60 | -50 | -40 | -30 | -20 | -10 | 0 | 10 | 20 | 30 | 40 | 50 | 60 | 70 | 80 |
|---|---|---|---|---|---|---|---|---|---|---|---|---|---|---|---|---|---|---|
| Share (%) | Application Example 1 | 7 | 27 | 47 | 63 | 77 | 87 | 93 | 100 | 100 | 100 | 97 | 87 | 77 | 60 | 43 | 23 | 7 |
| | Application Example 2 | 6 | 25 | 43 | 59 | 73 | 83 | 91 | 98 | 100 | 98 | 94 | 83 | 73 | 56 | 40 | 22 | 6 |
| | Application Example 3 | 6 | 25 | 44 | 61 | 74 | 84 | 92 | 99 | 100 | 99 | 95 | 84 | 74 | 58 | 41 | 22 | 6 |
| | Application Example 4 | 6 | 23 | 41 | 57 | 71 | 82 | 90 | 98 | 100 | 98 | 93 | 82 | 71 | 54 | 38 | 20 | 6 |
| | Application Example 5 | 6 | 25 | 44 | 61 | 74 | 85 | 92 | 99 | 100 | 99 | 96 | 85 | 74 | 58 | 41 | 22 | 6 |
| Privacy (%) | Application Example 1 | 3 | 10 | 17 | 23 | 30 | 33 | 40 | 43 | 50 | 63 | 80 | 97 | 100 | 93 | 73 | 43 | 13 |
| | Application Example 2 | 3 | 10 | 16 | 23 | 30 | 34 | 41 | 45 | 54 | 66 | 82 | 98 | 100 | 92 | 71 | 41 | 13 |
| | Application Example 3 | 3 | 10 | 16 | 23 | 30 | 34 | 41 | 45 | 53 | 66 | 82 | 99 | 100 | 92 | 72 | 42 | 13 |
| | Application Example 4 | 4 | 12 | 20 | 27 | 34 | 38 | 44 | 47 | 55 | 66 | 82 | 97 | 100 | 96 | 77 | 47 | 15 |
| | Application Example 5 | 4 | 13 | 20 | 28 | 35 | 39 | 46 | 49 | 56 | 67 | 85 | 98 | 100 | 92 | 73 | 43 | 13 |

**Table 12 Ratio of the luminance value of the horizontal viewing angle peep-proofing mode to the luminance value of the share mode (Privacy/Share (%))**

| | | -80 | -70 | -60 | -50 | -40 | -30 | -20 | -10 | 0 | 10 | 20 | 30 | 40 | 50 | 60 | 70 | 80 |
|---|---|---|---|---|---|---|---|---|---|---|---|---|---|---|---|---|---|---|
| Privacy/ Share (%) | Application Example 2 | 48 | 36 | 35 | 36 | 38 | 38 | 42 | 42 | 50 | 62 | 81 | 109 | 128 | 152 | 163 | 180 | 190 |
| | Application Example 3 | 53 | 37 | 35 | 36 | 38 | 38 | 43 | 43 | 50 | 63 | 83 | 112 | 128 | 152 | 166 | 183 | 200 |
| | Application Example 4 | 68 | 49 | 45 | 43 | 45 | 43 | 45 | 45 | 51 | 63 | 82 | 110 | 132 | 164 | 186 | 217 | 253 |
| | Application Example 5 | 68 | 49 | 43 | 44 | 45 | 44 | 48 | 48 | 53 | 65 | 84 | 109 | 128 | 152 | 169 | 187 | 205 |

As can be seen from the data in Table 7, Table 8, and Table 12, when the second liquid crystal composition filled in the display device of the present application has a higher clear point, a larger optical anisotropy (Δn, nₑ, n₀), a larger dielectric anisotropy (Δε, ε_{∥}, ε_{⊥}), a larger elastic constant (K₁₁, K₂₂, K₃₃), a smaller rotational viscosity, a smaller bulk viscosity, a better phase transformation point in low temperature storage, and better voltage holding stability (VHR (Initial), VHR (UV), VHR (Ra)), regarding the present application in the wide viewing angle mode, the luminance values of theta=-80°~-10° and theta=10°~80° have greater relative values relative to the luminance value of theta=0° (the changes of the luminance values of theta=-80°~-10° and theta=10°~80° relative to the luminance value of theta=0° are smaller), that is, the present application has a better display effect throughout the angle range of theta=-80°~80°, that is, can meet the wide viewing angle display requirements. In the single-side viewing angle peep-proofing mode, the luminance values of theta=-80°~30° and theta=50°~80° have greater relative values relative to the luminance value of theta=40° (the changes of the luminance values of theta=-80°~30° and theta=50°~80° relative to the luminance value of theta=40° are greater), and in the angle range of theta=-50°~-30°, the Privacy/Share ratio is ≤45%, that is, the present application can realize narrow viewing angle display in the angle range of theta=-50°~-30° and has higher Privacy/Share ratio in other viewing angles, of which display is normal, that is, a single-side peep-proofing in the angle range of theta=-50°~-30° is realized.

In conclusion, the single-side peep-proof liquid crystal display device of the present application has a better display effect in the wide viewing angle mode and has wider viewing angle, and can realize the technical effect of single-side peep-proofing in the single-side viewing angle peep-proofing mode.

The above embodiments are merely illustrative of the technical concepts and features of the present invention, and provided for facilitating the understanding and practice of the present invention by those skilled in the art. However, the protection scope of the invention is not limited thereto. Equivalent variations or modifications made without departing from the spirit and essence of the present invention are intended to be contemplated within the protection scope of the present invention.

### Industrial Applicability

The single-side peep-proof liquid crystal display device of involved in the present invention can be applied to the field of liquid crystal.

## Claims

1. A single-side peep-proof liquid crystal display device, **characterized in that** the liquid crystal display device sequentially comprises, along the light emergent side, a backlight plate, a lower polarizer, a display panel, an upper polarizer and a dye liquid crystal panel;
the display panel comprises at least one substrate, at least one conductive layer, and a layer of a first liquid crystal composition;
the dye liquid crystal panel comprises a first substrate, a first conductive layer, a dye liquid crystal layer, and a second substrate; and
the dye liquid crystal layer comprises a second liquid crystal composition and dye molecules.

2. The liquid crystal display device according to claim 1, **characterized in that** the direction of the upper polarizer and the direction of the lower polarizer each independently is in a vertical direction or a horizontal direction.

3. The liquid crystal display device according to claim 1, **characterized in that** the display panel generates a transverse electric field in the energized state.

4. The liquid crystal display device according to claim 1, **characterized in that** the dye liquid crystal panel generates a transverse electric field in the energized state.

5. The liquid crystal display device according to claim 1, **characterized in that** the dye liquid crystal panel comprises the first substrate, the first conductive layer, a first alignment layer, the dye liquid crystal layer, a second alignment layer, and the second substrate.

6. The liquid crystal display device according to claim 5, **characterized in that** the dye liquid crystal layer has a thickness of 1-12 um.

7. The liquid crystal display device according to claim 1, **characterized in that** the liquid crystal display device is in a wide viewing angle mode when a voltage is applied only on the display panel; and the liquid crystal display device is in a single-side viewing angle peep-proofing mode when a voltage is applied on both the display panel and the dye liquid crystal panel.

8. The liquid crystal display device according to claim 1, **characterized in that** in the dye liquid crystal panel, the dye molecules are dichroic dye molecules.

9. The liquid crystal display device according to claim 1, **characterized in that** in the dye liquid crystal panel, the second liquid crystal composition comprises at least one compound of general formula M: 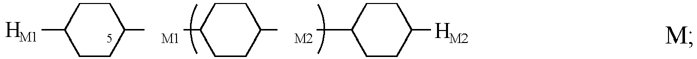 wherein,
R_{M1} and R_{M2} each independently represents C₁₋₁₂ linear or branched alkyl, 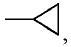 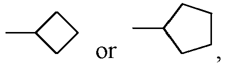 one or more than two nonadjacent -CH₂- in the C₁₋₁₂ linear or branched alkyl can each be independently replaced by -CH=CH-, -C≡C-, -O-, -CO-, -CO-O- or -O-CO-;
ring 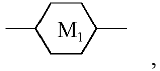 ring 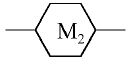 and ring 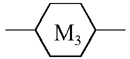 each independently represents 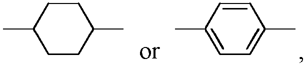 wherein one or more -CH₂- in 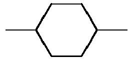 can be replaced by -O-, and one or more single bond in the rings can be replaced by double bond, at most one -H on 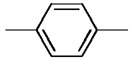 can be substituted by halogen;
Z_{M1} and Z_{M2} each independently represents single bond, -CO-O-, -O-CO-, -CH₂O-, -OCH₂-, -C≡C-, -CH=CH-, -CH₂CH₂- or -(CH₂)₄-; and
n_{M} represents 0, 1 or 2, wherein when n_{M}=2, ring 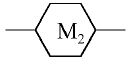 can be same or different, Z_{M2} can be same or different.

10. The liquid crystal display device according to claim 9, **characterized in that** in the dye liquid crystal panel, the second liquid crystal composition further comprises at least one compound of general formula A-1 and/or general formula A-2: 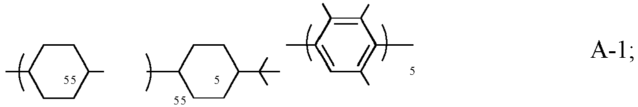 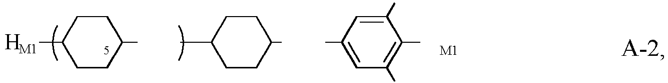 wherein,
R_{A1} and R_{A2} each independently represents C₁₋₁₂ linear or branched alkyl, 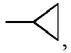 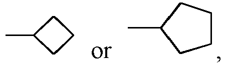 one or more than two nonadjacent -CH₂- in the C₁₋₁₂ linear or branched alkyl can each be independently replaced by -CH=CH-, -C≡C-, -O-, -CO-, -CO-O- or -O-CO-, and one or more -H in the C₁₋₁₂ linear or branched alkyl, 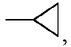 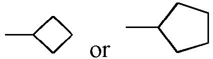 can each be independently substituted by -F or -Cl;
ring 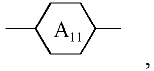 ring 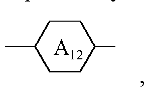 ring 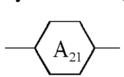 and ring 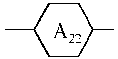 each independently represents 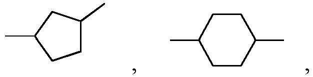 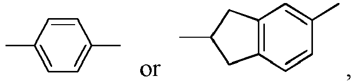 wherein one or more -CH₂- in 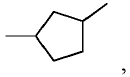 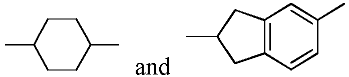 can be replaced by -O-, one or more single bond in the rings can be replaced by double bond, wherein one or more -H on 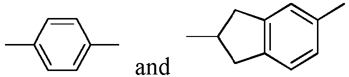 can each be independently substituted by -F, -Cl or -CN, one or more -CH= in the rings can be replaced by -N=;
Z_{A11}, Z_{A21} and Z_{A22} each independently represents single bond, -CH₂CH₂-, -CF₂CF₂-, -CO-O-, -O-CO-, -O-CO-O-, -CH=CH-, -CF=CF-, -CH₂O- or -OCH₂-;
L_{A11}, L_{A12}, L_{A13}, L_{A21} and L_{A22} each independently represents -H, C₁₋₃ alkyl, or halogen;
X_{A1} and X_{A2} each independently represents halogen, C₁₋₅ halogenated alkyl or halogenated alkoxy, C₂₋₅ halogenated alkenyl or halogenated alkenoxy;
n_{A11} represents 0, 1, 2 or 3, when n_{A11}=2 or 3, ring 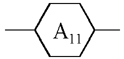 can be same or different, and Z_{A11} can be same or different;
n_{A12} represents 1 or 2, wherein when n_{A12}=2, ring 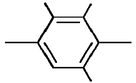 can be same or different; and
n_{A2} represents 0, 1, 2 or 3, wherein when n_{A2}=2 or 3, ring 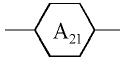 can be same or different, and Z_{A21} can be same or different.

11. Use of the single-side peep-proof liquid crystal display device according to any one of claims 1-10 in the field of single-side peep-proofing.
